(19) Europäisches Patentamt / European Patent Office / Office européen des brevets

(11) **EP 3 412 450 B1**

(12) **EUROPEAN PATENT SPECIFICATION**

(45) Date of publication and mention
of the grant of the patent:
**12.05.2021 Bulletin 2021/19**

(21) Application number: **17747620.7**

(22) Date of filing: **06.02.2017**

(51) Int Cl.:
*B32B 27/22* (2006.01)          *B32B 17/10* (2006.01)
*B32B 27/30* (2006.01)          *C03C 27/12* (2006.01)
*B32B 7/02* (2019.01)

(86) International application number:
**PCT/JP2017/004257**

(87) International publication number:
**WO 2017/135470 (10.08.2017 Gazette 2017/32)**

(54) **LAMINATE**

LAMINAT

STRATIFIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.02.2016 JP 2016021377
05.02.2016 JP 2016021378
05.02.2016 JP 2016021379**

(43) Date of publication of application:
**12.12.2018 Bulletin 2018/50**

(73) Proprietor: **Kuraray Co., Ltd.
Okayama 710-0801 (JP)**

(72) Inventors:
• **ASANUMA, Yoshiaki
Kurashiki-shi
Okayama 713-8550 (JP)**
• **KUSUDOU, Takeshi
Kurashiki-shi
Okayama 713-8550 (JP)**

(74) Representative: **Müller-Boré & Partner
Patentanwälte PartG mbB
Friedenheimer Brücke 21
80639 München (DE)**

(56) References cited:
EP-A1- 2 463 336          WO-A1-2014/147842
WO-A1-2015/125932          JP-A- 2011 225 449
JP-A- 2015 116 681          JP-A- 2015 116 681
JP-A- 2015 117 141          JP-A- 2015 117 141

**Description**

Technical Field

The present invention relates to a laminate which is excellent in handleability, is not susceptible to degradation in handleability at the initial stage in production and even after being stored for long periods, and exhibits excellent safety performance when used as an interlayer film for laminated glass.

Background Art

A laminated glass obtained by sandwiching a laminated resin sheet, which has high strength and high transparency and is excellent in adhesion to glass and flexibility, between two glass plates is excellent in transparency and penetration resistance and is used for a variety of safety glass such as automobile windshield.

From the viewpoint of absorbing impact occurring when a person or an object collides against a laminated glass, it is preferable to use an interlayer film for laminated glass that is soft at an operating temperature, for example, a temperature near room temperature. For example, a plasticized polyvinyl acetal composed of a polyvinyl acetal resin and a plasticizer, and the like are used. Patent Literature 1 describes that a head injury criteria (HIC value) is preferably less than 1000 in a laminated glass used in automobile windshield and in order to adjust the HIC value of the laminated glass to be such a low value, it is preferable to use a soft interlayer film for laminated glass containing a specific amount or more of a plasticizer with respect to a polyvinyl acetal.

However, since the plasticized polyvinyl acetal is soft so as to be easily elongated and has adherence property, the handleability thereof is problematic in some cases. For example, when the plasticized polyvinyl acetal is stored in a state of being wound in a roll shape, autohesion occurs so that the plasticized polyvinyl acetal is difficult to handle in some cases. In addition, when the interlayer film for laminated glass is wound out from the roll, elongation or distortion occurs, and when a laminated glass is produced, a defect that air bubbles remain at an interface between glass and the interlayer film for laminated glass is likely to occur, in some cases.

In recent years, from the viewpoint of improving living environment quality, a demand for sound insulation of windows has been increasing. In the case of a laminated glass, by using an interlayer film for laminated glass having sound insulation performance, it is possible to improve the sound insulation performance of a laminated glass to be obtained. However, the interlayer film for laminated glass having suitable sound insulation performance is softer than a typical interlayer film for laminated glass so as to be easily elongated and has strong adherence property. Thus, such an interlayer film for laminated glass is more difficult to handle in some cases.

In this regard, Patent Literature 2 describes a multi-layered interlayer film for laminated glass as an interlayer film for laminated glass achieving a balance between sound insulation performance and handleability, the multi-layered interlayer film for laminated glass being obtained by interposing an interlayer which contains a polyvinyl acetal having a relatively small average amount of a residual hydroxyl group and a large amount of a plasticizer, with outer layers which contain a polyvinyl acetal having a relatively large average amount of a residual hydroxyl group and a small amount of a plasticizer JP 2015-116681 A discloses a laminate comprising layer A which comprises polyvinyl acetal (A) having an average residual hydroxyl group amount X of 15 to 50 mole% and a plasticizer (Ap); and layer B which comprises polyvinyl acetal (B) having an average residual hydroxyl group amount Y of 10 to 45 mole% and a plasticizer (Bp), where $X \geq Y$, and a hydroxyl value of the plasticizer (Ap), HV(Ap) mg KOH/g, and a hydroxyl value of the plasticizer (Bp), HV(Bp) mg KOH/g, satisfy a relationship: HV(Ap)>HV(Bp).

Citation List

Patent Literature

Patent Literature 1: JP 2005-206445 A
Patent Literature 2: JP 2007-331959 A

Summary of Invention

Technical Problem

However, the interlayer film for laminated glass having improved flexibility as in Patent Literature 1 generally tends to have high adherence property, and when the interlayer film for laminated glass formed from the plasticized

EP 3 412 450 B1

polyvinyl acetal is stored in a state of being wound around a roll, blocking caused by autohesion occurs so that a problem of difficulty in handling arises. As described above, in the interlayer film for laminated glass, the autohesion property and the flexibility thereof has a tradeoff relation, and thus it is difficult to achieve both properties at a high level.

In this regard, an object of the present invention is to provide a laminate which is excellent in handleability and exhibits excellent safety performance in a case where the laminate is used as an interlayer film for laminated glass and in which handleability is less likely to be degraded even in a case where the laminate is stored for long periods.

Another object of the present invention is to provide a laminate in which autohesion property at the initial stage can be maintained and a change in stress over time is also small even in the case of being stored for long periods, and in a case where the laminate is used as an interlayer film for laminated glass, flexibility is improved and excellent safety performance is exhibited.

Further, the multi-layered interlayer film for laminated glass conventionally known has a problem in that even after sufficient time periods have elapsed from production of the laminated glass, the same amount of the plasticizer as that in the initial stage of production is maintained in each of an inner layer and an outer layer, and optical distortion derived from a refractive index difference between the inner layer and the outer layer occurs.

In this regard, still another object of the present invention is to provide a laminate which is less likely to undergo autohesion, has a high mechanical strength, is less likely to be elongated, and has excellent handleability, and in which handleability is maintained even in a case where the laminate is stored for long periods, and flexibility is excellent and there is less problem of optical distortion in a case where the laminate is used as an interlayer film for laminated glass.

Still another object of the present invention is to provide a laminate in which, in a case where the laminate of the present invention is used as an interlayer film for laminated glass, even when a trim of the interlayer film for laminated glass is recovered and then melt-kneaded, transparency of a composition to be obtained is high.

Solution to Problem

According to the present invention, the above objects are achieved by providing the laminate as defined in claim 1 and the method as defined in claim 17. Further embodiments are defined in the dependent claims.

Advantageous Effects of Invention

According to the present invention, it is possible to provide a laminate which is less likely to undergo autohesion even in a case where the laminate is stored for long periods as well as at the initial stage of production of the laminate, and which exhibits excellent safety performance in a case where the laminate is used as an interlayer film for laminated glass.

In an embodiment of the present invention, since the autohesion property of the laminate at the initial stage can be maintained and a change in stress over time is also small even in a case where the laminate is stored at room temperature for long periods, the laminate is excellent in handleability at the time of being stored. In addition, in a case where the laminate of the present invention is used as an interlayer film for laminated glass, flexibility can be improved and safety performance can be exhibited.

According to an embodiment of the present invention, it is possible to provide a laminate which is less likely to undergo autohesion, has a high mechanical strength, is less likely to be elongated, and has excellent handleability, and in which handleability is maintained in a case where the laminate is stored for long periods, and flexibility is excellent and there is less problem of optical distortion in a case where the laminate is used as an interlayer film for laminated glass.

In addition, as another embodiment of the present invention, it is possible to provide a laminate in which, in a case where the laminate of the present invention is used as an interlayer film for laminated glass, even when a trim of the interlayer film for laminated glass is recovered and then melt-kneaded, transparency of a composition to be obtained is high.

Description of Embodiments

A laminate of the present invention includes a layer (1) and a layer (2) on at least one surface of the layer (1), at least one layer of outermost layers is the layer (1), and the laminate has a laminated structure with three or more layers. The layer (1) contains a thermoplastic resin (I), and the layer (2) contains a thermoplastic resin (II). In addition, the layer (2) contains 4 to 200 parts by mass of a plasticizer A with respect to 100 parts by mass of the thermoplastic resin (II), and a hydroxyl value of the plasticizer A is designated as HV(A) mgKOH/g, wherein HV(A) $\geq$ 30.

In the laminate of the present invention, in a case where a stress at 10% elongation at 23°C of the laminate is designated as $S_1$ MPa, a stress at 10% elongation at 23°C of the laminate after being stored at 23°C and 50% RH for 5 weeks is designated as $S_2$ MPa, and a stress at 10% elongation at 23°C of the laminate after being treated at 140°C and 50% RH for 30 minutes, cooled to 23°C within 1 hour after being treated, and stored at 23°C and 50% RH for 5

3

weeks after being cooled is designated as $S_3$ MPa, it is preferable that the following formulae (1) to (3) are satisfied.

(1): $S_2/S_1 \geq 0.2$ and/or $S_1 - S_2 \leq 1.0$
(2): $S_3/S_1 \leq 0.9$ and/or $S_1 - S_3 \geq 0.2$
(3): $S_2 - S_3 > 0$

In the laminate of the present invention, when the total amount of the plasticizer contained in the layer (1) with respect to 100 parts by mass of the thermoplastic resin (I) is designated as $X_i$ parts by mass and the total amount of the plasticizer contained in the layer (2) with respect to 100 parts by mass of the thermoplastic resin (II) is designated as $Y_i$ parts by mass, it is preferable that $0 < Y_i - X_i$.

Further, in a case where the laminate is stored at 23°C and 50% RH for 5 weeks, when the total amount of the plasticizer contained in the layer (1) with respect to 100 parts by mass of the thermoplastic resin (I) is designated as $X_{ii}$ parts by mass and the total amount of the plasticizer contained in the layer (2) with respect to 100 parts by mass of the thermoplastic resin (II) is designated as $Y_{ii}$ parts by mass, it is preferable that $X_{ii} - X_i < 20$ and $Y_i - Y_{ii} < 20$.

In addition, in a case where the laminate is treated at 140°C for 30 minutes, then cooled to 23°C within 1 hour, and stored at 23°C and 50% RH for 5 weeks, when the total amount of the plasticizer contained in the layer (1) with respect to 100 parts by mass of the thermoplastic resin (I) is designated as $X_{iii}$ parts by mass and the total amount of the plasticizer contained in the layer (2) with respect to 100 parts by mass of the thermoplastic resin (II) is designated as $Y_{iii}$ parts by mass, it is preferable that $3 < X_{iii} - X_i$, $3 < Y_i - V_{iii}$, $0 < X_{iii} - X_{ii}$, and $0 < Y_{ii} - Y_{iii}$, and it is more preferable that $3 < X_{iii} - X_i$, $5 < Y_i - V_{iii}$, $0 < X_{iii} - X_{ii}$, and $0 < Y_{ii} - Y_{iii}$.

[Layer (1)]

The laminate of the present invention includes the layer (1) containing a thermoplastic resin (I) in at least one layer of outermost layers. The thermoplastic resin contained in the layer (1) may be the thermoplastic resin (I) alone or a plurality of thermoplastic resins. When the thermoplastic resin (I) is contained in the layer (1), an interlayer film for laminated glass having a suitable strength and being excellent moldability is obtained, but a thermosetting resin may be contained in the layer (1). The thermoplastic resin (I) may have, for example, cross-linkage for the purpose of adjusting a melt viscosity at melt molding.

As a thermoplastic resin having a hydroxyl group, for example, the above-described thermoplastic resin having a hydroxyl group is exemplified, and specific examples thereof include a polyvinyl acetal having a hydroxyl group

A hydroxyl value of the thermoplastic resin having a hydroxyl group is preferably 50 mgKOH/g or more, more preferably 70 mgKOH/g or more, further preferably 90 mgKOH/g or more, particularly preferably 110 mgKOH/g or more, and most preferably 160 mgKOH/g or more. In addition, the hydroxyl value is preferably 1300 mgKOH/g or less, more preferably 500 mgKOH/g or less, further preferably 400 mgKOH/g or less, and particularly preferably 300 mgKOH/g or less. When the hydroxyl value is less than 50 mgKOH/g, there is a tendency that compatibility with the plasticizer A is degraded so that the plasticizer A bleeds or the plasticizer A is likely to migrate to other layers. In addition, when the hydroxyl value is more than 1300 mgKOH/g, there is a tendency that the moisture resistance of a laminate to be obtained deteriorates so that water is easily absorbed or compatibility with the plasticizer A is degraded.

Incidentally, the hydroxyl value indicates the milligram (mg) number of potassium hydroxide equivalent to the hydroxyl group in 1 g of a sample and can be measured in accordance with JIS K 1557: 2007.

A thermoplastic resin subjected to modification of introducing an ester group to the polyvinyl acetal or the like can also be used. As a method for introducing an ester group, for example, a method of graft polymerizing, etc. a monomer having a poly(meth)acrylic acid ester with the polyvinyl acetal is exemplified.

An ester value of the thermoplastic resin having an ester group is preferably 5 mgKOH/g or more, more preferably 8 mgKOH/g or more, further preferably 15 mgKOH/g or more, particularly preferably 30 mgKOH/g or more, and most preferably 50 mgKOH/g or more. In addition, the ester value is preferably 700 mgKOH/g or less, more preferably 500 mgKOH/g or less, further preferably 400 mgKOH/g or less, particularly preferably 300 mgKOH/g or less, and most preferably 200 mgKOH/g or less. When the ester value is less than 5 mgKOH/g, there is a tendency that compatibility with the plasticizer A is degraded so that the plasticizer A bleeds or the plasticizer A is likely to migrate to other layers. In addition, when the ester value is more than 700 mgKOH/g, compatibility with the plasticizer A may be degraded.

Incidentally, the ester value indicates the mg number of potassium hydroxide necessary for completely saponifying ester contained in 1 g of a sample and can be measured in accordance with JIS K 0070: 1992.

As a thermoplastic resin having the hydroxyl group and the ester group described above, for example, the aforementioned thermoplastic resin having a hydroxyl group and an ester group is exemplified, and specific examples thereof include a polyvinyl acetal having a hydroxyl group and an ester group.

From the viewpoint of having excellent adhesion to glass, transparency, mechanical strength, and flexibility, a polyvinyl acetal is used as the thermoplastic resin (I). Hereinafter, a polyvinyl acetal contained in the layer (1) is referred to as polyvinyl acetal (1), and regarding the polyvinyl acetal (1), an average amount of a residual hydroxyl group is designated as H(1), an average amount of a residual vinyl ester group is designated as VE(1), an average acetalization degree is designated as A(1), and a polymerization degree of polyvinyl alcohol as a raw material is designated as P(1).

Incidentally, the average amount of the residual hydroxyl group, the average amount of the residual vinyl ester group, the average acetalization degree, and the polymerization degree of polyvinyl alcohol as a raw material of the polyvinyl acetal can be measured in accordance with JIS K 6728: 1977.

H(1) of the polyvinyl acetal (1) is preferably 15 mol% or more, more preferably 17 mol% or more, further preferably 19 mol% or more, and particularly preferably 20 mol% or more. In addition, H(1) is preferably 50 mol% or less, more preferably 40 mol% or less, further preferably 35 mol% or less, still more preferably 33 mol% or less, still more preferably 32 mol% or less, particularly preferably 31 mol% or less, and most preferably 30 mol% or less. When H(1) is less than 15 mol%, the mechanical strength of the laminate of the present invention tends to decrease. In addition, when H(1) is more than 50 mol%, the plasticizer tends to migrate between layers or bleed when the laminate of the present invention is stored.

VE(1) of the polyvinyl acetal (1) is preferably 20 mol% or less, more preferably 10 mol% or less, further preferably 5 mol% or less, and particularly preferably less than 2 mol%. When VE(1) is more than 20 mol%, there is a tendency that the laminate of the present invention is likely to be colored when used for long periods. In addition, VE(1) is preferably 0.01 mol% or more and more preferably 0.1 mol% or more.

A(1) of the polyvinyl acetal (1) is preferably 50 mol% or more, more preferably 60 mol% or more, further preferably 64 mol% or more, even more preferably 67 mol% or more, even more preferably 68 mol% or more, particularly preferably 69 mol% or more, and most preferably 70 mol% or more. In addition, A(1) is preferably 85 mol% or less, more preferably 78 mol% or less, and further preferably 74 mol% or less. When A(1) is less than 50 mol%, the plasticizer tends to migrate between layers or bleed when the laminate of the present invention is stored. In addition, when A(1) is more than 85 mol%, the strength of the laminate of the present invention tends to be not sufficient.

A value of H(1) + A(1) in the polyvinyl acetal (1) is preferably 95 mol% or more, more preferably 96 mol% or more, further preferably 98 mol% or more, and particularly preferably 99 mol% or more. When H(1) + A(1) is 95 mol% or more, the weather resistance and the stability of the laminate of the present invention are improved, and for example, occurrence of a change in color or odor tends to be suppressed in a case where the laminate is stored for long periods.

P(1) of the polyvinyl acetal (1) is preferably 1100 or more, more preferably 1200 or more, and further preferably 1600 or more. In addition, P(1) is preferably 3500 or less and more preferably 3000 or less. When P(1) is less than 1100, the penetration resistance of the laminate of the present invention may be decreased, the laminate of the present invention may be likely to undergo autohesion (blocking), or the strength of the laminate may not be sufficient, and especially, this tends to be problematic in a case where the laminate of the present invention is used as an interlayer film for laminated glass. In addition, when P(1) is more than 3500, in a case where the laminate of the present invention is used as an interlayer film for laminated glass, productivity of laminated glass tends to be decreased.

The polyvinyl acetal (1) is typically produced by using polyvinyl alcohol as a raw material. The polyvinyl alcohol can be obtained by a conventionally known method. That is, the polyvinyl alcohol can be obtained by polymerizing a carboxylic acid vinyl ester compound such as vinyl acetate and saponifying the obtained polymer. As a method for polymerizing a carboxylic acid vinyl ester compound, a conventionally known method such as a solution polymerization method, a bulk polymerization method, a suspension polymerization method, or an emulsion polymerization method can be applied. As a polymerization initiator, an azo-based initiator, a peroxide-based initiator, a redox-based initiator, or the like can be appropriately selected depending on a polymerization method. As for a saponification reaction, an alcoholysis reaction, a hydrolysis reaction, or the like using a conventionally known alkali catalyst or acid catalyst can be applied.

Further, the polyvinyl alcohol may be obtained by copolymerizing a carboxylic acid vinyl ester compound with other monomers and saponifying the obtained copolymer as long as it is not against the spirit of the present invention. Examples of the other monomers include α-olefin such as ethylene, propylene, n-butene, and isobutylene; acrylic acid esters such as methyl acrylate, ethyl acrylate, n-butyl acrylate, i-butyl acrylate, t-butyl acrylate, 2-ethylhexyl acrylate, dodecyl acrylate, and octadecyl acrylate; methacrylic acid esters such as methyl methacrylate, ethyl methacrylate, n-butyl methacrylate, i-butyl methacrylate, t-butyl methacrylate, 2-ethylhexyl methacrylate, dodecyl methacrylate, and octadecyl methacrylate; acrylamides and derivatives thereof such as acrylamide, N-methylacrylamide, N-ethylacrylamide, N,N-dimethylacrylamide, diacetone acrylamide, acrylamide propane sulfonic acid and a salt thereof, acrylamide propyl dimethylamine, a salt thereof, and a quaternary salt thereof, and N-methylol acrylamide and a derivative thereof; methacrylamides and derivatives thereof such as methacrylamide, N-methylmethacrylamide, N-ethylmethacrylamide, methacrylamide propane sulfonic acid and a salt thereof, methacrylamide propyl dimethylamine, a salt thereof, and a quaternary salt thereof, and N-methylol methacrylamide and a derivative thereof; vinyl ethers such as methyl vinyl ether, ethyl vinyl ether, n-butyl vinyl ether, i-butyl vinyl ether, t-butyl vinyl ether, dodecyl vinyl ether, and stearyl vinyl ether; nitriles such as acrylonitrile and methacrylonitrile; vinyl halides such as vinyl chloride and vinyl fluoride; vinylidene halides such as vinylidene chloride and vinylidene fluoride; allyl compounds such as allyl acetate and allyl chloride; maleic acid ester or maleic anhydride; vinylsilyl compounds such as vinyl trimetoxysilane; and isopropenyl acetate. In a case where these other monomers are copolymerized, in general, other monomers are used at a ratio of less than 10 mol% to the carboxylic acid vinyl ester compound.

The polyvinyl acetal (1) can be obtained, for example, by the following method. First, an aqueous solution of polyvinyl alcohol having a concentration of 3 to 30 mass% is maintained in a temperature range of 80 to 100°C, and then the temperature is gradually cooled over 10 to 60 minutes. When the temperature is lowered to -10 to 30°C, an aldehyde and an acid catalyst are added and the acetalization reaction is carried out for 30 to 300 minutes while maintaining constant temperature. Thereafter, the reaction liquid is increased to a temperature of 20 to 80°C over 30 to 200 minutes, and the temperature is maintained for 10 to 300 minutes. Then, the reaction liquid is neutralized as necessary by adding an alkaline neutralizing agent such as sodium hydroxide, the resin is washed with water and dried to obtain the polyvinyl acetal (1).

Either an organic acid or an inorganic acid can be used as the acid catalyst used for the acetalization reaction, and examples thereof include acetic acid, para-toluene sulfonic acid, nitric acid, sulfuric acid, and hydrochloric acid. Among these, hydrochloric acid, sulfuric acid, or nitric acid is preferably used.

An aldehyde having 1 to 8 carbon atoms is preferably used as the aldehyde used for the acetalization reaction. Examples of the aldehyde having 1 to 8 carbon atoms include formaldehyde, acetaldehyde, propionaldehyde, n-butylaldehyde, isobutylaldehyde, n-hexylaldehyde, 2-ethylbutylaldehyde, n-octylaldehyde, 2-ethylhexylaldehyde, and benzaldehyde. These may be used alone or two or more kinds thereof may be used in combination. Among these, from the viewpoint of a balance between mechanical characteristics and handleability of the polyvinyl acetal (1), n-butylaldehyde is preferable.

In a case where the polyvinyl acetal (1) uses an aldehyde having n carbon atoms as a raw material, n is preferably 2 or more and more preferably 4 or more. When n is less than 2, the handleability of aldehyde deteriorates, and the production of the polyvinyl acetal (1) tends to be difficult. In addition, n is preferably 8 or less and more preferably 5 or less. When n is more than 8, there is a tendency than the water solubility of aldehyde is decreased, and it is difficult to remove unreacted aldehyde by washing with water after the production of the polyvinyl acetal (1), and odor is likely to occur due to the residual aldehyde. Particularly, n is most preferably 4.

In the laminate of the present invention, the plasticizer A is contained as a plasticizer in the layer (1). Herein, the plasticizer A means a plasticizer having HV(A) of 30 or more wherein a hydroxyl value thereof is designated as HV(A) mgKOH/g. The plasticizer A has properties that the plasticizer A is less likely to migrate to other layers at the time of storage, rapidly migrates to other layers at the time of a thermal treatment, and is less likely to migrate to other layers after the thermal treatment. For this reason, by using the plasticizer A, it is possible to achieve a balance between weak autohesion property at the time of storage and high flexibility after production of laminated glass.

HV(A) is 30 or more, preferably 50 or more, more preferably 80 or more, further preferably 100 or more, particularly preferably 150 or more, and most preferably 200 or more. In addition, HV(A) is preferably 500 or less, more preferably 450 or less, further preferably 400 or less, particularly preferably 350 or less, and most preferably 300 or less. From the viewpoint of suppressing volatilization of the plasticizer A from the laminate and suppressing degradation of physical properties of the laminate caused by the plasticizer A migrating to other layers in a case where the laminate is stored for long periods, HV(A) is preferably 30 or more. In addition, from the viewpoint of suppressing migration of the plasticizer A between layers or bleeding of the plasticizer A and making the moisture resistance of the laminate of the present invention sufficient in a case where the laminate is stored for long periods, HV(A) is preferably 500 or less.

Examples of the plasticizer A include a polyester compound such as polyester diol consisting of an alternating copolymer of adipic acid and 3-methyl-1,5-pentanediol, polyester diol obtained by addition polymerization of ε-caprolactone to propylene glycol, polycaprolactone diol, or polycaprolactone monool; a polyether compound such as polyethyleneglycol, polypropylene glycol, bisphenol A ethylene oxide adduct, or bisphenol A propylene oxide adduct; and glycerin ester such as castor oil. Incidentally, the hydroxyl value of the plasticizer can be measured in accordance with JIS K 1557: 2007.

A number average molecular weight of the plasticizer A is preferably 200 or more, more preferably 330 or more, further preferably 360 or more, even more preferably 380 or more, even more preferably 420 or more, particularly preferably 460 or more, and most preferably 500 or more. In addition, the number average molecular weight of the plasticizer A is preferably 2000 or less, more preferably 1200 or less, further preferably 900 or less, and particularly preferably 750 or less. When the number average molecular weight of the plasticizer A is less than 200, there is a tendency that the plasticizer A is likely to volatilize, or the plasticizer A is likely to migrate to other layers in a case where the laminate is stored for long periods. In addition, when the number average molecular weight of the plasticizer A is more than 2000, the plasticizer A has poor compatibility with a thermoplastic resin, and thus the transparency of a sheet to be obtained may be degraded. Moreover, the plasticizing effect with respect to the thermoplastic resin may not be sufficiently exhibited.

In particular, from the viewpoint of suppressing volatilization of the plasticizer A from the laminate and suppressing degradation of physical properties of the laminate caused by the plasticizer A migrating to other layers in a case where the laminate is stored for long periods, 5 to 100 mass% of the plasticizer A is preferably a compound having a number average molecular weight of 360 or more, 5 to 100 mass% of the plasticizer A is more preferably a compound having a number average molecular weight of 380 or more, and 5 to 100 mass% of the plasticizer A is further preferably a compound having a number average molecular weight of 400 or more. In addition, 30 to 100 mass% of the plasticizer A is more preferably a compound having a number average molecular weight of 360 or more, 50 to 100 mass% of the plasticizer A is further preferably a compound having a number average molecular weight of 360 or more, 70 to 100 mass% of the plasticizer A is particularly preferably a compound having a number average molecular weight of 360 or more, and 90 to 100 mass% of the plasticizer A is most preferably a compound having a number average molecular weight of 360 or more.

Examples of the compound having a molecular weight of 360 or more of the plasticizer A include a polyester compound, such as polyester diol consisting of an alternating copolymer of adipic acid and 3-methyl-1,5-pentanediol or polyester diol obtained by addition polymerization of ε-caprolactone to propylene glycol, having a molecular weight of 360 or more; a polyether compound, such as polyethyleneglycol, polypropylene glycol, bisphenol A propylene oxide adduct, or bisphenol A ethylene oxide adduct, having a molecular weight of 360 or more; and glycerin ester, such as castor oil, having a molecular weight of 360 or more.

The plasticizer A preferably has at least one hydroxyl group per molecule and more preferably at least two hydroxyl groups per molecule. When the plasticizer A has a hydroxyl group, there is a tendency that the compatibility of the plasticizer A with the thermoplastic resin is improved so that bleeding of the plasticizer A is suppressed or migration of the plasticizer A to other layers is suppressed.

The plasticizer A preferably has at least one ether bond or ester bond. When the plasticizer A has an ether bond or an ester bond, there is a tendency that the compatibility of the plasticizer A with the thermoplastic resin is improved so that bleeding of the plasticizer A is suppressed or migration of the plasticizer A to other layers is suppressed.

The content of the plasticizer A is preferably 4 parts by mass or more, more preferably 10 parts by mass or more, further preferably 15 parts by mass or more, even more preferably 20 parts by mass or more, even more preferably 25 parts by mass or more, particularly preferably 30 parts by mass or more, and most preferably 40 parts by mass or more, with respect to 100 parts by mass of the thermoplastic resin (I). In addition, the content of the plasticizer A is preferably 200 parts by mass or less, more preferably 150 parts by mass or less, further preferably 130 parts by mass or less, even more preferably 110 parts by mass or less, particularly preferably 90 parts by mass or less, and most preferably 70 parts by mass or less, with respect to 100 parts by mass of the thermoplastic resin (I). When the content of the plasticizer A is 4 parts by mass or more with respect to 100 parts by mass of the thermoplastic resin (I), there is a tendency that the flexibility of the laminate is improved, and migration of the plasticizer B to other layers is suppressed or bleeding of the plasticizer B from the laminate of the present invention is suppressed. In addition, when the content of the plasticizer A is 200 parts by mass or less with respect to 100 parts by mass of the thermoplastic resin (I), there is a tendency that the strength and the transparency of the laminate are improved, migration of the plasticizer A to other layers is suppressed, or bleeding of the plasticizer A from the laminate of the present invention is suppressed.

Incidentally, an embodiment in which a plurality of plasticizers A are used in combination and the total amount of the plurality of plasticizers A satisfies the above range may be employed.

In the laminate of the present invention, the plasticizer B different from the plasticizer A is contained as a plasticizer in the layer (1). Herein, the plasticizer B means a plasticizer having HV(B) of less than 30 in a case where a hydroxyl value thereof is designated as HV(B) mgKOH/g.

HV(B) is less than 30, preferably less than 10, and more preferably less than 5.

Examples of the plasticizer B include a diester compound of monovalent carboxylic acid and dihydric alcohol such as triethylene glycol di-2-ethylhexanoate (3GO), tetraethylene glycol di-2-ethylhexanoate (4GO), or octaethylene glycol di-2-ethylhexanoate (8GO); adipic acid ester such as dibutyl adipate, dihexyl adipate, di(2-(2-butoxy)ethoxy)ethyl adipate (DBEEA), di(2-butoxyethyl) adipate, or dinonyl adipate; and a diester compound of divalent carboxylic acid and monohydric alcohol such as dioctyl phthalate or di(2-ethylhexyl) sebacate. From the viewpoint of having excellent compatibility with the polyvinyl acetal and excellent plasticizing effect to the polyvinyl acetal, the plasticizer B is preferably a diester compound of monovalent carboxylic acid and dihydric alcohol and/or a diester compound of divalent carboxylic acid and monohydric alcohol as described above, and more preferably triethylene glycol di-2-ethylhexanoate.

A number average molecular weight of the plasticizer B is preferably 200 or more, more preferably 310 or more, further preferably 360 or more, even more preferably 380 or more, particularly preferably 400 or more, and most preferably 420 or more. In addition, the number average molecular weight of the plasticizer B is preferably 2000 or less, more preferably 1200 or less, further preferably 900 or less, and particularly preferably 750 or less. When the number average molecular weight of the plasticizer B is less than 200, there is a tendency that the plasticizer B is likely to volatilize, or the plasticizer B is likely to migrate to other layers in a case where the laminate is stored for long periods. In addition, when number average molecular weight of the plasticizer B is more than 2000, there is a tendency that the strength and the transparency of the laminate is degraded or the plasticizing effect with respect to the thermoplastic resin is degraded.

In particular, from the viewpoint of suppressing volatilization of the plasticizer B from the laminate, 5 to 100 mass% of the plasticizer B is preferably a compound having a number average molecular weight of 310 or more, 5 to 100 mass% of the plasticizer B is more preferably a compound having a number average molecular weight of 360 or more, 5 to 100 mass% of the plasticizer B is further preferably a compound having a number average molecular weight of 380 or more, and 5 to 100 mass% of the plasticizer B is particularly preferably a compound having a number average molecular weight of 400 or more. In addition, 30 to 100 mass% of the plasticizer B is more preferably a compound having a number average molecular weight of 360 or more, 50 to 100 mass% of the plasticizer B is further preferably a compound having a number average molecular weight of 360 or more, 70 to 100 mass% of the plasticizer B is particularly preferably a compound having a number average molecular weight of 360 or more, and 90 to 100 mass% of the plasticizer B is most preferably a compound having a number average molecular weight of 360 or more.

Examples of the compound having a number average molecular weight of 360 or more of the plasticizer B include triethylene glycol di-2-ethylhexanoate (3GO), tetraethylene glycol di-2-ethylhexanoate (4GO), octaethylene glycol di-2-ethylhexanoate (8GO), di(2-(2-butoxyethoxy)ethyl) adipate (DBEEA), dinonyl adipate, dioctyl phthalate, and di(2-ethylhexyl) sebacate.

The plasticizer B is preferably a compound not having a hydroxyl group. When the plasticizer B does not have a hydroxyl group, the plasticizer B tends to be less likely to be extracted by water when the laminate of the present invention is in contact with water.

The content of the plasticizer B is preferably 3 parts by mass or more, more preferably 5 parts by mass or more, further preferably 10 parts by mass or more, even more preferably 15 parts by mass or more, particularly preferably 20 parts by mass or more, and most preferably 25 parts by mass or more, with respect to 100 parts by mass of the thermoplastic resin (I). In addition, the content of the plasticizer B is preferably 100 parts by mass or less, more preferably 70 parts by mass or less, further preferably 60 parts by mass or less, even more preferably 50 parts by mass or less, particularly preferably 45 parts by mass or less, and most preferably 35 parts by mass or less, with respect to 100 parts by mass of the thermoplastic resin (I). When the content of the plasticizer B is 3 parts by mass or more with respect to 100 parts by mass of the thermoplastic resin (I), the flexibility of the laminate tends to be improved. In addition, when the content of the plasticizer B is 100 parts by mass or less with respect to 100 parts by mass of the thermoplastic resin (I), there is a tendency that the strength and the transparency of the laminate are improved or migration of the plasticizer B to other layers is suppressed.

Incidentally, an embodiment in which a plurality of plasticizers B are used in combination and the total amount of the plurality of plasticizers B satisfies the above range may be employed.

In the laminate of the present invention, both the plasticizer A and the plasticizer B are contained in the layer (1). The mass ratio of the plasticizer B to the plasticizer A (a content of the plasticizer B/a content of the plasticizer A) is preferably 0.05 or more, more preferably 0.1 or more, further preferably 0.15 or more, and particularly preferably 0.2 or more. In addition, the mass ratio of the plasticizer B to the plasticizer A (the content of the plasticizer B/the content of the plasticizer A) is preferably 20 or less, more preferably 10 or less, further preferably 7 or less, and particularly preferably 5 or less. When the mass ratio of the plasticizer B to the plasticizer A (the content of the plasticizer B/the content of the plasticizer A) in the layer is 0.05 or more, the plasticizing effect by the plasticizer B tends to be easily obtained. In addition, when the mass ratio of the plasticizer B to the plasticizer A (the content of the plasticizer B/the content of the plasticizer A) in the layer is 20 or less, there is a tendency that migration of the plasticizer B to other layers is suppressed or bleeding of the plasticizer B from the laminate of the present invention is suppressed.

In the laminate of the present invention, in a case where the total amount of the plasticizer contained in the layer (1) with respect to 100 parts by mass of the thermoplastic resin (I) is designated as $X_i$ parts by mass, $X_i$ is preferably 10 or more, further preferably 20 or more, and particularly preferably 25 or more. In addition, $X_i$ is preferably 120 or less, more preferably 110 or less, further preferably 90 or less, particularly preferably 80 or less, and most preferably 70 or less. When $X_i$ is more than 120, there is a tendency that the laminate of the present invention is likely to undergo autohesion (blocking), or the strength of the laminate is not sufficient.

A cloud point of a solution obtained by dissolving 9 parts by mass of the polyvinyl acetal (1) in 100 parts by mass of the plasticizer A is preferably 50°C or lower, more preferably 40°C or lower, and further preferably 30°C or lower. When the polyvinyl acetal (1) has a cloud point of the solution obtained by dissolving 9 parts by mass of the polyvinyl acetal (1) in 100 parts by mass of the plasticizer A of higher than 50°C, in a case where the plasticizer A is contained in the layer (2) of the laminate of the present invention, there is a tendency that the plasticizer A is less likely to migrate to the layer (1) even when the laminate of the present invention is subjected to the thermal treatment, and sufficient flexibility is less likely to be obtained when the laminate of the present invention is used as an interlayer film for laminated glass.

The cloud point of a solution obtained by dissolving 9 parts by mass of the polyvinyl acetal (1) in 100 parts by mass of the plasticizer B is preferably 60°C or higher, more preferably 70°C or higher, and further preferably 80°C or higher. When the polyvinyl acetal (1) has a cloud point of a solution obtained by dissolving 9 parts by mass of the polyvinyl acetal (1) in 100 parts by mass of the plasticizer B of lower than 60°C, in a case where the plasticizer B is contained in the layer (2) of the laminate of the present invention, there is a tendency that the plasticizer B is likely to migrate to the layer (1) when the laminate of the present invention is stored at room temperature and handleability is degraded.

A difference between the cloud point of the solution obtained by dissolving 9 parts by mass of the polyvinyl acetal (1) in 100 parts by mass of the plasticizer A and the cloud point of the solution obtained by dissolving 9 parts by mass of the polyvinyl acetal (1) in 100 parts by mass of the plasticizer B is preferably 10°C or higher, more preferably 20°C or higher, further preferably 30°C or higher, and particularly preferably 50°C or higher. By adjusting the difference between the cloud points to 10°C or higher, a balance between suppression of migration of the plasticizer in a case where the laminate of the present invention is stored at room temperature and promotion of migration of the plasticizer in a case where the laminate is treated at a high temperature can be efficiently achieved, which is preferable.

The cloud point is an index representing the compatibility of the plasticizer A or the plasticizer B with the polyvinyl acetal, and as the plasticizer is excellent in compatibility, the cloud point tends to be decreased. Therefore, as a method for adjusting the difference between the cloud points to 10°C or higher, for example, a method using plasticizers each having different compatibility with the polyvinyl acetal as the plasticizer A and the plasticizer B, and the like are exemplified.

The cloud point of the solution can be evaluated, for example, as a temperature at which a part of a colorless and transparent solution, which is obtained by dissolving a mixture of 9 parts by mass of polyvinyl acetal and 100 parts by mass of the plasticizer A at 150°C, becomes white cloudy by the temperature thereof being decreased under stirring.

A storage elastic modulus at 20°C measured by performing a dynamic viscoelasticity test to the layer (1) in the condition of a frequency of 0.3 Hz in accordance with JIS K 7244-4: 1999 is preferably 10 MPa or more, more preferably 30 MPa, further preferably 50 MPa, even more preferably 100 MPa, and most preferably 1000 MPa or more. When the storage elastic modulus at 20°C of the layer (1) is less than 10 MPa, the laminate is likely to be elongated, and thus the handleability of the laminate tends to be degraded. In addition, from the viewpoint of setting the autohesion property of the laminate to be low, it is preferable that at least one layer of outer layers of the laminate of the present invention, preferably, both outer layers satisfy the above range. Incidentally, the upper limit of the storage elastic modulus is not particularly limited, but is typically 10000 MPa or less.

As a method for adjusting the storage elastic modulus of the layer (1) to 10 MPa or more, for example, a method of decreasing the amount of the plasticizer in the layer (1), and the like are exemplified.

A thickness of the layer (1) is preferably 0.01 mm or more, more preferably 0.04 mm or more, further preferably 0.08 mm or more, and particularly preferably 0.1 mm or more. In addition, the thickness of the layer (1) is preferably 0.5 mm or less, more preferably 0.4 mm or less, further preferably 0.35 mm or less, and particularly preferably 0.3 mm or less. When the thickness of the layer (1) is 0.01 mm or more, there is a tendency that the strength of the laminate of the present invention is improved, or when the laminate of the present invention is stored for long periods, the plasticizer A easily migrates from the layer (2) to the layer (1) so that a decrease in autohesion (blocking) resistance or strength is suppressed. In addition, when the thickness of the layer (1) is 0.5 mm or less, a time for causing the plasticizer A to sufficiently migrate to the layer (1) can be decreased when a laminated glass is produced by using the laminate of the present invention as an interlayer film for laminated glass, and thus production efficiency of the laminated glass can be improved.

[Layer (2)]

The laminate of the present invention includes at least one layer (2). The layer (2) contains a thermoplastic resin (II), and contains 4 to 200 parts by mass of the plasticizer A with respect to 100 parts by mass of the thermoplastic resin (II). The thermoplastic resin contained in the layer (2) may be the thermoplastic resin (II) alone or a plurality of thermoplastic resins.

As the thermoplastic resin (II), the same thermoplastic resin exemplified in the thermoplastic resin (I) can be used. AS the thermoplastic resin (II), similarly to the thermoplastic resin (I), a polyvinyl acetal is used. Hereinafter, the polyvinyl acetal contained in the layer (2) is designated as a polyvinyl acetal (2). Regarding the polyvinyl acetal (2), an average amount of a residual hydroxyl group is designated as H(2), an average amount of a residual vinyl ester group is designated as VE(2), an average acetalization degree is designated as A(2), and a polymerization degree of polyvinyl alcohol as a raw material is designated as P(2).

Preferable ranges of H(2), VE(2), A(2), and P(2) are the same as the preferable ranges of H(1), VE(1), A(1), P(1), respectively. Each of H(2), VE(2), A(2), and P(2) may be the same as or different from the value of each of H(1), VE(1), A(1), and P(1).

In the laminate of the present invention, 4 to 200 parts by mass of the plasticizer A is contained in the layer (2) with respect to 100 parts by mass of the thermoplastic resin (II) contained in the layer (2). As the plasticizer A, the same plasticizer A exemplified in the layer (1) can be used. The preferable condition and the preferable content of the plasticizer A are the same as the preferable condition and the preferable content of the plasticizer A presented in the layer (1).

In the laminate of the present invention, the plasticizer B is further contained as a plasticizer in the layer (2). As the plasticizer B, the same plasticizer B as exemplified in the layer (1) is used. In The preferable condition and the preferable content of the plasticizer B are the same as the preferable condition and the preferable content of the plasticizer B presented in the layer (1).

In the laminate of the present invention, both the plasticizer A and the plasticizer B are contained in the layer (2), and a preferable range of a mass ratio of the plasticizer B to the plasticizer A (a content of the plasticizer B/a content of the plasticizer A) is the same as the preferable range presented in the layer (1).

In the laminate of the present invention, in a case where the total amount of the plasticizer contained in the layer (2) with respect to 100 parts by mass of the thermoplastic resin (II) is designated as $Y_i$ parts by mass, $Y_i$ is preferably 20 or more, more preferably 25 or more, further preferably 30 or more, particularly preferably 40 or more, and most preferably 50 or more. In addition, $Y_i$ is preferably 190 or less, more preferably 150 or less, further preferably 130 or less, even more preferably 100 or less, particularly preferably 90 or less, and most preferably 80 or less. When $Y_i$ is less than 20, sufficient sound insulation property tends to be not exhibited in a case where the laminate of the present invention is used as an interlayer film for laminated glass. In addition, when $Y_i$ is more than 190, the strength of the laminate of the present invention tends to be not sufficient.

The preferable range of the storage elastic modulus of the layer (2) is the same as the preferable range presented in the layer (1).

A thickness of the layer (2) is preferably 0.05 mm or more, more preferably 0.2 mm or more, further preferably 0.3 mm or more, and particularly preferably 0.4 mm or more. In addition, the thickness of the layer (2) is preferably 1.5 mm or less, more preferably 1.1 mm or less, further preferably 1.0 mm or less, and particularly preferably 0.8 mm or less. When the thickness of the layer (2) is 0.05 mm or more, flexibility and sound insulation property can be exhibited in a case where the laminate of the present invention is used as an interlayer film for laminated glass. In addition, when the thickness of the layer (2) is 1.5 mm or less, there is a tendency that when a laminated glass is produced by using the laminate of the present invention as an interlayer film for laminated glass, the layer (2) is suppressed from protruding from an end portion of the laminated glass and the yield of the laminated glass to be obtained is improved.

[Laminate]

The laminate of the present invention includes a layer (1) and a layer (2) on at least one surface of the layer (1), at least one layer of outermost layers is the layer (1), and the laminate has a laminated structure with three or more layers. The laminate preferably has a laminated structure in which both outermost layers are the layer (1).

For example, a laminate in which the layer (1), the layer (2), and the layer (1) are laminated in this order is preferable. In addition, a laminate in which the layer (1), the layer (2), the layer (1), the layer (2), and the layer (1) are laminated in this order may be employed. In a case where the laminate of the present invention has a layer structure in which at least one layer of the layer (1) and the layer (2) is included in plural, the composition and the thickness of the layers included in plural may be the same as or different from one another as long as the provision of the present invention is satisfied.

In the laminate of the present invention, the thermoplastic resin (I) and the thermoplastic resin (II) may be the same as or different from each other.

It is preferable that the laminate of the present invention is a laminate including a layer (1), and a layer (2) at least one surface of the layer (1), the layer (1) contains a thermoplastic resin (I), the layer (2) contains a thermoplastic resin (II), and the laminate satisfies the following Formulae (1) to (3).

(1): $S_2/S_1 \geq 0.2$ and/or $S_1 - S_2 \leq 1.0$
(2): $S_3/S_1 \leq 0.9$ and/or $S_1 - S_3 \geq 0.2$
(3): $S_2 - S_3 > 0$

In Formula (1), $S_2/S_1 \geq 0.2$, it is preferable that $S_2/S_1 \geq 0.4$, it is more preferable that $S_2/S_1 \geq 0.6$, it is further preferable that $S_2/S_1 \geq 0.7$, it is even more preferable that $S_2/S_1 \geq 0.8$, it is particularly preferable that $S_2/S_1 \geq 0.9$, and it is most preferable that $S_2/S_1 \geq 0.95$. When $S_2/S_1 < 0.2$, in a case where the laminate is stored for long periods, the laminate tends to be likely to undergo autohesion.

In Formula (1), $S_1 - S_2 \leq 1.0$, it is preferable that $S_1 - S_2 \leq 0.8$, it is more preferable that $S_1 - S_2 \leq 0.6$, it is further preferable that $S_1 - S_2 \leq 0.4$, it is particularly preferable that $S_1 - S_2 \leq 0.2$, and it is most preferable that $S_1 - S_2 \leq 0.1$. When $S_1 - S_2 > 1.0$, in a case where the laminate is stored for long periods, the laminate tends to be likely to undergo autohesion.

In the laminate of the present invention, as a method of setting $S_2/S_1 \geq 0.2$ and/or $S_1 - S_2 \leq 1.0$, a method of adjusting a difference in content between the plasticizers with respect to 100 parts by mass of each thermoplastic resin contained in the layer (1) or the layer (2) $(Y_i - X_i)$ to be more than 0, a method using a plasticizer having a hydroxyl value of 30 mgKOH/g or more and 500 mgKOH or less, and the like are exemplified. In addition, these methods may be combined.

In Formula (2), $S_3/S_1 \leq 0.9$, it is preferable that $S_3/S_1 \leq 0.7$, it is more preferable that $S_3/S_1 \leq 0.5$, it is further

preferable that $S_3/S_1 \leq 0.3$, it is particularly preferable that $S_3/S_1 \leq 0.2$, and it is most preferable that $S_3/S_1 \leq 0.15$. When $S_3/S_1 > 0.9$, there is a tendency that in a case where a laminated glass is produced, the flexibility of the laminate is not sufficient and thus the impact absorption performance of the laminated glass is degraded.

In Formula (2), $S_1 - S_3 \geq 0.2$, it is preferable that $S_1 - S_3 \geq 0.4$, it is more preferable that $S_1 - S_3 \geq 0.6$, it is further preferable that $S_1 - S_3 \geq 0.8$, it is even more preferable that $S_1 - S_3 \geq 1.0$, it is even more preferable that $S_1 - S_3 \geq 1.2$, it is particularly preferable that $S_1 - S_3 \geq 1.5$, and it is most preferable that $S_1 - S_3 \geq 1.7$. When $S_1 - S_3 < 0.2$, there is a tendency that in a case where a laminated glass is produced, the flexibility of the laminate is not sufficient and thus the impact absorption performance of the laminated glass is degraded.

In the laminate of the present invention, as a method of setting $S_3/S_1 \leq 0.9$ and/or $S_1 - S_3 \geq 0.2$, a method of adjusting a difference in content between the plasticizers with respect to 100 parts by mass of each thermoplastic resin contained in the layer (1) or the layer (2) $(Y_i - X_i)$ to be more than 0, a method using a plasticizer having a hydroxyl group or having an ether bond or an ester bond, and the like are exemplified. In addition, these methods may be combined. Further, a method of adjusting an absolute value $|H(1) - H(2)|$ of a difference between the average amounts of residual hydroxyl groups to be 20 mol% or less, a method of adjusting an absolute value $|A(1) - A(2)|$ of a difference between the average acetalization degrees to be 20 mol% or less, a method of adjusting an absolute value $|VE(1) - VE(2)|$ of a difference between the average amounts of residual vinyl ester groups to be 20 mol% or less, a method of adjusting both the polymerization degrees of the polyvinyl acetals ($P(1)$ and $P(2)$) contained in respective layers to be 1100 or more, a method of adjusting an absolute value $|n - m|$ of a difference in the number of carbon atoms in aldehyde as a raw material to be 2 or less, and the like are exemplified as a preferable method.

In Formula (3), $S_2 - S_3 > 0$, it is preferable that $S_2 - S_3 > 0.2$, it is more preferable that $S_2 - S_3 > 0.4$, it is further preferable that $S_2 - S_3 > 0.7$, it is particularly preferable that $S_2 - S_3 > 1.0$, and it is most preferable that $S_2 - S_3 > 1.5$. When $S_2 - S_3 \leq 0$, there is a tendency that in a case where a laminated glass is produced, the flexibility of the laminate is not sufficient and thus the impact absorption performance of the laminated glass is degraded.

In the laminate of the present invention, as a method of setting $S_2 - S_3 > 0$, a method of adjusting a difference in content between the plasticizers with respect to 100 parts by mass of each thermoplastic resin contained in the layer (1) or the layer (2) $(Y_i - X_i)$ to be more than 0, a method using a plasticizer having a hydroxyl values of 30 mgKOH/g or more and 500 mgKOH/g or less, a method using a plasticizer having a hydroxyl group or having an ether bond or an ester bond, a method of employing a three layer structure in which a plasticizer having a hydroxyl value of 30 mgKOH/g or more is blended in an inner layer, and the like are exemplified. In addition, these methods may be combined. Further, a method of adjusting an absolute value $|H(1) - H(2)|$ of a difference between the average amounts of residual hydroxyl groups to be 20 mol% or less, a method of adjusting an absolute value $|A(1) - A(2)|$ of a difference between the average acetalization degrees to be 20 mol% or less, a method of adjusting an absolute value $|VE(1) - VE(2)|$ of a difference between the average amounts of residual vinyl ester groups to be 20 mol% or less, a method of adjusting both the polymerization degrees of the polyvinyl acetals ($P(1)$ and $P(2)$) contained in respective layers to be 1100 or more, a method of adjusting an absolute value $|n - m|$ of a difference in the number of carbon atoms in aldehyde as a raw material of the polyvinyl acetal to be 2 or less, and the like are exemplified as a preferable method.

In the laminate of the present invention, a temperature at which $\tan\delta$, which is measured by performing a dynamic viscoelasticity test in the condition of a frequency of 0.3 Hz in accordance with JIS K 7244-4: 1999 in at least one layer of the layer (1) and the layer (2), becomes maximal is preferably 20°C or higher, more preferably 25°C or higher, further preferably 30°C or higher, particularly preferably 35°C or higher, and most preferably 40°C or higher. In addition, it is more preferable that the temperature at which $\tan\delta$ in the layer (1) becomes maximal satisfies the above range. When the temperature at which $\tan\delta$ in both the layer (1) and the layer (2) becomes maximal is lower than 20°C, the autohesion property of the laminate of the present invention near room temperature may be increased.

As a method for adjusting the temperature at which $\tan\delta$, which is measured by performing the dynamic viscoelasticity test in the condition of a frequency of 0.3 Hz in accordance with JIS K 7244-4: 1999 in at least one layer of the layer (1) and the layer (2), becomes maximal, to 20°C or higher, a method of allowing the layer not to contain a plasticizer, a method of decreasing the content of a plasticizer in the layer (1) and/or the layer (2), and the like are exemplified.

It is preferable that at least one of the polyvinyl acetal (1) and the polyvinyl acetal (2) satisfies the aforementioned preferable ranges of the average amount of the residual hydroxyl group, the average amount of the residual vinyl ester group, the average acetalization degree, and the polymerization degree.

In the laminate of the present invention, the absolute value $|H(1) - H(2)|$ of the difference between the average amounts of residual hydroxyl groups of respective polyvinyl acetals is 10 mol% or less, preferably 5 mol% or less, even more preferably 3 mol% or less, particularly preferably 2 mol% or less, and most preferably 1 mol% or less. In a case where $|H(1) - H(2)|$ is more than 20 mol%, there is a tendency that it is difficult to recycle, as a transparent composition, a trim or an off-spec product generated when the laminate of the present invention is produced.

In the laminate of the present invention, the absolute value $|VE(1) - VE(2)|$ of the difference between the average amounts of the residual vinyl ester groups of respective polyvinyl acetals is preferably 20 mol% or less, more preferably 10 mol% or less, further preferably 5 mol% or less, even more preferably 3 mol% or less, particularly preferably 2 mol% or less, and most preferably 1 mol% or less. In a case where |VE(1) - VE(2)| is more than 20 mol%, there is a tendency that it is difficult to recycle, as a transparent composition, a trim or an off-spec product generated when the laminate of the present invention is produced.

In the laminate of the present invention, the absolute value |A(1) - A(2)| of the difference between the average acetalization degrees of respective polyvinyl acetals is preferably 20 mol% or less, more preferably 10 mol% or less, further preferably 5 mol% or less, even more preferably 3 mol% or less, particularly preferably 2 mol% or less, and most preferably 1 mol% or less. In a case where |A(1) - A(2)| is more than 20 mol%, there is a tendency that it is difficult to recycle, as a transparent composition, a trim or an off-spec product generated when the laminate of the present invention is produced.

In the laminate of the present invention, both the average acetalization degrees A(1) and A(2) are preferably 67.0 mol% or more and more preferably 85.0 mol% or less. In addition, both the polymerization degrees P(1) and P(2) are preferably 1100 or more.

In the laminate of the present invention, the polyvinyl acetal (1) uses an aldehyde having n carbon atoms as a raw material, and the polyvinyl acetal (2) uses an aldehyde having m carbon atoms as a raw material, the absolute value |n - m| of the difference between respective carbon atoms is preferably 2 or less, more preferably 1 or less, and further preferably 0. When |n - m| is more than 2, there is a tendency that it is difficult to recycle, as a transparent composition, a trim or an off-spec product generated when the laminate of the present invention is produced, and in a case where the laminate of the present invention is stored for long periods, characteristics thereof may change.

From the viewpoint of suppressing volatilization of the plasticizer A from the laminate and suppressing degradation of physical properties of the laminate caused by the plasticizer A migrating to other layers in a case where the laminate is stored for long periods, in the laminate of the present invention, it is preferable that 5 to 100 mass%, more preferably 30 to 100 mass%, further preferably 50 to 100 mass%, particularly preferably 70 to 100 mass%, and most preferably 90 to 100 mass% of the plasticizer contained in the inner layer having a relatively large content of the plasticizer is a compound having a hydroxyl group.

In the laminate of the present invention, when the mass ratio of the plasticizer B to the plasticizer A (the content of the plasticizer B/the content of the plasticizer A) in the layer (1) is designated as R1 and the mass ratio of the plasticizer B to the plasticizer A (the content of the plasticizer B/the content of the plasticizer A) in the layer (2) is designated as R2, R1 > R2. When R1 > R2, where the layer (1) is used as the outer layer and the layer (2) is used as the inner layer, migration of the plasticizer is less likely to occur during storage, but in a case where the laminate is treated at a temperature higher than 100°C, the plasticizer A is likely to migrate from the inner layer to the outer layer so that safety performance can be exhibited in a case where the laminate is used as an interlayer film for laminated glass. In addition, from the same reason, an embodiment may be employed in which the plasticizer A is not contained in the layer (1), and the plasticizer A or the plasticizer A and the plasticizer B are contained in the layer (2).

In the laminate of the present invention, regarding the ratio of the total amount of the plasticizers contained in the layer (1) and the layer (2) to the total amount of the thermoplastic resin (I) and the thermoplastic resin (II), when the total amount of the thermoplastic resins is considered as 100 parts by mass, the total amount of the plasticizers contained in the layer (1) and the layer (2) is preferably 20 parts by mass or more, more preferably 30 parts by mass or more, further preferably 40 parts by mass or more, particularly preferably 43 parts by mass or more, and most preferably 45 parts by mass or more. In addition, when the total amount of the thermoplastic resins is considered as 100 parts by mass, the total amount of the plasticizers contained in the layer (1) and the layer (2) is preferably 120 parts by mass or less, more preferably 110 parts by mass or less, and further preferably 100 parts by mass or less. When the total amount of the plasticizers is 20 parts by mass or more, in a case where the laminate of the present invention is used as an interlayer film for laminated glass, sound insulation property tends to be sufficiently exhibited. In addition, when the total amount of the plasticizers is 120 parts by mass or less, there is a tendency that migration of the plasticizer between layers from the laminate of the present invention or bleeding of the plasticizer can be suppressed.

In the laminate of the present invention, the total amount of the plasticizer contained in the layer (1) with respect to 100 parts by mass of the thermoplastic resin (I) is designated as $X_i$ parts by mass and the total amount of the plasticizer contained in the layer (2) with respect to 100 parts by mass of the thermoplastic resin (II) is designated as $Y_i$ parts by mass.

$Y_i - X_i$ is preferably $0 < Y_i - X_i$, more preferably $10 \leq Y_i - X_i$, further preferably $10 < Y_i - X_i$, even more preferably $15 \leq Y_i - X_i$, even more preferably $20 \leq Y_i - X_i$, particularly preferably $25 \leq Y_i - X_i$, especially preferably $30 \leq Y_i - X_i$, and most preferably $35 \leq Y_i - X_i$. When $Y_i - X_i$ is $0 \geq Y_i - X_i$, there is a tendency that the strength of the laminate is suitable but the laminate is likely to undergo autohesion (blocking).

In the laminate of the present invention, in a case where the laminate obtained by laminating the layer (1) and the layer (2) laminated on at least one surface of the layer (1) is stored at 23°C and 50% RH for 5 weeks, the total amount of the plasticizer contained in the layer (1) with respect to 100 parts by mass of the thermoplastic resin (I) is designated as $X_{ii}$ parts by mass and the total amount of the plasticizer contained in the layer (2) with respect to 100 parts by mass of the thermoplastic resin (II) is designated as $Y_{ii}$ parts by mass.

$X_{ii}$ - $X_i$ is preferably $X_{ii}$ - $X_i$ < 20, more preferably $X_{ii}$ - $X_i$ < 15, further preferably $X_{ii}$ - $X_i$ < 10, and particularly preferably $X_{ii}$ - $X_i$ < 5. When $X_{ii}$ - $X_i$ < 20, since the plasticizer is less likely to migrate even when the laminate is stored for long periods, autohesion property can be maintained to be low. $Y_i$ - $Y_{ii}$ is preferably $Y_i$ - $Y_{ii}$ < 20, more preferably $Y_i$ - $Y_{ii}$ < 15, further preferably $Y_i$ - $Y_{ii}$ < 10, and particularly preferably $Y_i$ - $Y_{ii}$ < 5. When $Y_i$ - $Y_{ii}$ < 20, since the plasticizer is less likely to migrate even when the laminate is stored for long periods, autohesion property can be maintained to be low.

In the laminate of the present invention, in a case where the laminate is treated at 140°C for 30 minutes, then cooled to 23°C within 1 hour, and stored at 23°C and 50% RH for 5 weeks, the total amount of the plasticizer contained in the layer (1) with respect to 100 parts by mass of the thermoplastic resin (I) is designated as $X_{iii}$ parts by mass and the total amount of the plasticizer contained in the layer (2) with respect to 100 parts by mass of the thermoplastic resin (II) is designated as $Y_{iii}$ parts by mass.

$X_{iii}$ - $X_i$ is preferably 3 < $X_{iii}$ - $X_i$, more preferably 10 < $X_{iii}$ - $X_i$, further preferably 15 < $X_{iii}$ - $X_i$, and particularly preferably 20 < $X_{iii}$ - $X_i$. In a case where 3 < $X_{iii}$ - $X_i$, by treating the laminate at a temperature higher than 100°C, the plasticizer rapidly migrates from the layer (2) to the layer (1), and thus a laminate with excellent flexibility can be obtained. Similarly, $Y_i$ - $Y_{iii}$ is preferably 3 < $Y_i$ - $Y_{iii}$, more preferably 5 < $Y_i$ - $Y_{iii}$, further preferably 10 < $Y_i$ - $V_{iii}$, even more preferably 15 < $Y_i$ - $Y_{iii}$, and particularly preferably 20 < $Y_i$ - $Y_{iii}$. In a case where 3 < $Y_i$ - $V_{iii}$, by treating the laminate at a temperature higher than 100°C, the plasticizer rapidly migrates from the layer (2) to the layer (1), and thus a laminate with excellent flexibility can be obtained.

$X_{iii}$ - $X_{ii}$ is preferably 0 < $X_{iii}$ - $X_{ii}$, more preferably 5 < $X_{iii}$ - $X_{ii}$, further preferably 10 < $X_{iii}$ - $X_{ii}$, and particularly preferably 15 < $X_{iii}$ - $X_{ii}$. A case where 0 < $X_{iii}$ - $X_{ii}$ is preferable from the viewpoint of being excellent in a balance between the characteristic that migration of the plasticizer is less likely to occur in a case where the laminate of the present invention is stored for long periods and the characteristic that the plasticizer rapidly migrates from the layer (2) to the layer (1) by treating the laminate at a temperature higher than 100°C so that a laminate with excellent flexibility can be obtained. Similarly, $Y_{ii}$ - $Y_{iii}$ is preferably 0 < $Y_{ii}$ - $Y_{iii}$, more preferably 5 < $Y_{ii}$ - $Y_{iii}$, further preferably 10 < $Y_{ii}$ - $Y_{iii}$, and particularly preferably 15 < $Y_{ii}$ - $Y_{iii}$. A case where 0 < $Y_{ii}$ - $Y_{iii}$ is preferable from the viewpoint of being excellent in a balance between the characteristic that migration of the plasticizer is less likely to occur in a case where the laminate of the present invention is stored for long periods and the characteristic that the plasticizer rapidly migrates from the layer (2) to the layer (1) by treating the laminate at a temperature higher than 100°C so that a laminate with excellent flexibility can be obtained.

In the laminate of the present invention, in a case where the laminate obtained by laminating the layer (1) and the layer (2) laminated on at least one surface of the layer (1) is stored at 23°C and 50% RH for 1 week, the total amount of the plasticizer contained in the layer (1) with respect to 100 parts by mass of the thermoplastic resin (I) is designated as $X_{iv}$ parts by mass and the total amount of the plasticizer contained in the layer (2) with respect to 100 parts by mass of the thermoplastic resin (II) is designated as $Y_{iv}$ parts by mass.

$X_{iv}$ - $X_i$ is preferably $X_{iv}$ - $X_i$ < 10, more preferably $X_{iv}$ - $X_i$ < 8, more preferably $X_{iv}$ - $X_i$ < 6, particularly preferably $X_{iv}$ - $X_i$ < 4, and most preferably $X_{iv}$ - $X_i$ < 2. When $X_{iv}$ - $X_i$ < 10, since the plasticizer is less likely to migrate even when the laminate is stored, autohesion property can be maintained to be low. Similarly, $Y_i$ - $Y_{iv}$ is preferably $Y_i$ - $Y_{iv}$ < 10, more preferably $Y_i$ - $Y_{iv}$ < 8, further preferably $Y_i$ - $Y_{iv}$ < 6, particularly preferably $Y_i$ - $Y_{iv}$ < 4, and most preferably $Y_i$ - $Y_{iv}$ < 2. When $Y_i$ - $Y_{iv}$ < 10, since the plasticizer is less likely to migrate even when the laminate is stored, autohesion property can be maintained to be low.

$X_{ii}$ - $X_{iv}$ is preferably $X_{ii}$ - $X_{iv}$ < 7, more preferably $X_{ii}$ - $X_{iv}$ < 5, further preferably $X_{ii}$ - $X_{iv}$ < 4, and particularly preferably $X_{ii}$ - $X_{iv}$ < 3. When $X_{ii}$ - $X_{iv}$ < 7, since the plasticizer is less likely to migrate even when the laminate is stored for long periods, autohesion property can be maintained to be low. Similarly, $Y_{iv}$ - $Y_{ii}$ is preferably $Y_{iv}$ - $Y_{ii}$ < 3 and more preferably $Y_{iv}$ - $Y_{ii}$ < 2. When $Y_{iv}$ - $Y_{ii}$ < 3, since the plasticizer is less likely to migrate even when the laminate is stored for long periods, autohesion property can be maintained to be low.

$X_{iii}$ - $X_{iv}$ is preferably 0 < $X_{iii}$ - $X_{iv}$, more preferably 5 < $X_{iii}$ - $X_{iv}$, further preferably 10 < $X_{iii}$ - $X_{iv}$, particularly preferably 15 < $X_{iii}$ - $X_{iv}$, and most preferably 20 < $X_{iii}$ - $X_{iv}$. A case where 0 < $X_{iii}$ - $X_{iv}$ is preferable from the viewpoint of being excellent in a balance between the characteristic that migration of the plasticizer is less likely to occur in a case where the laminate of the present invention is stored for long periods and the characteristic that the plasticizer rapidly migrates from the layer (2) to the layer (1) by treating the laminate at a temperature higher than 100°C so that a laminate with excellent flexibility can be obtained. Similarly, $Y_{iv}$ - $Y_{iii}$ is preferably 0 < $Y_{iv}$ - $Y_{iii}$, more preferably 5 < $Y_{iv}$ - $Y_{iii}$, further preferably 10 < $Y_{iv}$ - $Y_{iii}$, particularly preferably 15 < $Y_{iv}$ - $Y_{iii}$, and most preferably 20 < $Y_{iv}$ - $Y_{iii}$. A case where 0 < $Y_{iv}$ - $Y_{iii}$ is preferable from the viewpoint of being excellent in a balance between the characteristic that migration of the plasticizer is less likely to occur in a case where the laminate of the present invention is stored for long periods and the characteristic that the plasticizer rapidly migrates from the layer (2) to the layer (1) by treating the laminate at a temperature higher than 100°C so that a laminate with excellent flexibility can be obtained.

In the laminate of the present invention, in a case where the total amount of the plasticizers satisfies the above condition, it is possible to obtain a laminate which is excellent in handleability when stored for long periods and exhibits high flexibility when used as an interlayer film for laminated glass.

The laminate of the present invention is less likely to undergo autohesion (blocking) at the time of being stored, has a high strength, and is excellent in handleability. Meanwhile, by performing a sufficient thermal treatment, for example, treating the laminate of the present invention at a high temperature and a high pressure by an autoclave used in a production process of a laminated glass, the plasticizer contained in the layer (2) migrates to the layer (1) so that the laminate of the present invention can suitably exhibit flexibility and sound insulation property required for an interlayer film for laminated glass.

In the laminate of the present invention, it is preferable that the total amount of the plasticizer contained in the layer (1) after being subjected to a thermal treatment at 50°C for 15 days is more than the total amount of the plasticizer contained in the layer (1) before the thermal treatment. In a case where the laminate of the present invention satisfies such a provision, by performing the thermal treatment to the laminate of the present invention at a high temperature and a high pressure by an autoclave used in a production process of a laminated glass, there is a tendency that the plasticizer contained in the layer (2) rapidly migrates to the layer (1), and when the laminate after migration is stored, the plasticizer A having migrated to the layer (1) once is less likely to migrate to the layer (2) again.

In the laminate of the present invention, it is preferable that a storage elastic modulus of at least one of the layer (1) and the layer (2) satisfies the preferable range described above. In addition, from the viewpoint of setting the autohesion property of the laminate to be low, it is preferable that at least one layer of the outer layers of the laminate of the present invention, preferably both the outer layers satisfy the preferable range described above.

A thickness of the laminate of the present invention is preferably 0.2 mm or more, more preferably 0.25 mm or more, and further preferably 0.3 mm or more. In addition, the thickness thereof is preferably 2.0 mm or less, more preferably 1.3 mm or less, and further preferably 1.0 mm or less. When the thickness of the laminate of the present invention is less than 0.2 mm, the penetration resistance of the laminate of the present invention tends to be degraded in the case of using the laminate as an interlayer film for laminated glass. In addition, when the thickness of the laminate of the present invention is more than 2.0 mm, the weight of a laminated glass using the laminate of the present invention tends to increase.

In the laminate of the present invention, regarding the combination of the thicknesses of the layer (1) and the layer (2), for example, the sum of the thickness of the layer (1) is preferably smaller than three times the sum of the thickness of the layer, more preferably smaller than two times the sum of the thickness of the layer, further preferably smaller than 1.2 times the sum of the thickness of the layer, particularly preferably smaller than 0.7 times the sum of the thickness of the layer, and most preferably smaller than 0.5 times the sum of the thickness of the layer. When the sum of the layer (1) is larger than times or more the thickness of the layer (2), in a case where the laminate of the present invention is stored, the plasticizer tends to migrate between layers or bleed, and in a case where the laminate of the present invention is used as an interlayer film for laminated glass, the penetration resistance and the sound insulation property of a laminated glass to be obtained tend to be impaired.

It is preferable that the laminate of the present invention has an uneven configuration on at least one surface from the viewpoint of allowing air bubbles, which are generated at an interface between an interlayer film for laminated glass and glass, to easily escape outside when the laminate is sandwiched as an interlayer film for laminated glass between two glass plates.

A ten point average roughness Rz of a surface, on which an uneven configuration is provided, of the laminate is preferably 10 $\mu$m or more, more preferably 15 $\mu$m or more, and further preferably 20 $\mu$m or more. In addition, the ten point average roughness Rz of a surface on which an uneven configuration is provided is preferably 100 $\mu$m or less, more preferably 80 $\mu$m or less, and further preferably 60 $\mu$m or less. When the ten point average roughness Rz of a surface on which an uneven configuration is provided is less than 10 $\mu$m, air bubbles tend to remain at the interface between the interlayer film for laminated glass and glass. In addition, when the ten point average roughness Rz of a surface on which an uneven configuration is provided is more than 100 $\mu$m, projections and depressions are not sufficiently leveled off at the time of production of a laminated glass so that the appearance of the laminated glass tends to be impaired.

As a method of setting the ten point average roughness Rz of a surface, on which an uneven configuration is provided, of the laminate to be 10 $\mu$m or more and 100 $\mu$m or less, for example, a method in which a concavo-convex pattern is transferred to the surface of the laminate using an emboss roll, an emboss sheet, or the like which has those surface roughnesses, and the like are exemplified.

Incidentally, a ten point average roughness Rz in the surface of the laminate can be measured using a surface roughness meter in accordance with JIS B 0601: 1994.

The laminate of the present invention may further contain conventionally known antioxidants, ultraviolet absorbers, and other additives other than the thermoplastic resin and the plasticizer in the layer (1) or the layer (2) within the range that the effect of the present invention is not impaired.

In a case where the laminate of the present invention is used in applications such as an interlayer film for laminated glass while the laminate is adjusted to have appropriate adhesion to glass, an adhesion improver (adhesion adjuster) may be further added. As such an adhesion improver, a conventionally known adhesion improver including, for example, alkali metal salts and alkali-earth metal salts such as sodium acetate, potassium acetate, magnesium acetate, and magnesium butyrate, can be used. The amount of the adhesion improver added can be adjusted such that, for example, a pummel value obtained in a pummel test becomes a value suitable for the intended purpose.

The total amount of the thermoplastic resin (I) and the plasticizer in the layer (1) is preferably 40 mass% or more, more preferably 60 mass% or more, further preferably 80 mass% or more, even more preferably 85 mass% or more, particularly preferably 90 mass% or more, and most preferably 95 mass% or more. When the total amount of the thermoplastic resin (I) and the plasticizer is 40 mass% or more, the object of the present invention can be suitably achieved. In addition, the total amount of the thermoplastic resin (II) and the plasticizer in the layer (2) is preferably 40 mass% or more, more preferably 60 mass% or more, further preferably 80 mass% or more, even more preferably 85 mass% or more, particularly preferably 90 mass% or more, and most preferably 95 mass% or more. When the total amount of the thermoplastic resin (II) and the plasticizer is 40 mass% or more, the object of the present invention can be suitably achieved.

A water content of the laminate of the present invention is set to preferably 0.1 mass% or more and more preferably 0.2 mass% or more. The water content of the laminate of the present invention is set to preferably 1 mass% or less and more preferably 0.8 mass% or less. When the water content satisfies this range, in a case where the laminate of the present invention is used as an interlayer film for laminated glass, adhesion force to glass can be set to be an appropriate value.

The laminate of the present invention is obtained, for example, in such a manner that a mixture obtained by mixing a polyvinyl acetal, a plasticizer, and another additive by a conventionally known method is molded into a sheet shape and laminated. The method of molding the mixture into a sheet shape and the laminating method are implemented by a conventionally known method.

[Laminated Glass]

The laminate of the present invention can be suitably used particularly as an interlayer film for laminated glass.

In a case where the laminate of the present invention is used as an interlayer film for laminated glass, a laminated glass obtained by sandwiching the interlayer film for laminated glass between two glass plates and performing a treatment to the obtained product at a temperature higher than 100°C for 10 minutes or longer tends to become suitable from the viewpoint of obtaining a laminated glass with excellent safety in which the plasticizers contained in the layer (1) and the layer (2), particularly, the plasticizer A migrates between layers and which includes a flexible interlayer film for laminated glass.

In a case where the laminate of the present invention is used as an interlayer film for laminated glass, as glass to be laminated with the laminate of the present invention, for example, inorganic glass such as float plate glass, polished plate glass, template glass, wire-reinforced plate glass, or heat-absorbing plate glass, conventionally known organic glass such as polymethyl methacrylate or polycarbonate, and the like can be used. These glasses may be colorless or colored. These glasses may be used alone or two or more kinds thereof may be used in combination. In addition, generally, the thickness of the glass is preferably 100 mm or less.

In a laminated glass obtained by sandwiching the laminate of the present invention between two glass plates and subjecting a treatment thereto at a temperature of 120°C or higher for at least 20 minutes, a maximum value of a loss factor at an excitation frequency of 2000 to 6000 Hz at 20°C is preferably 0.05 or more, more preferably 0.10 or more, further preferably 0.15 or more, and particularly preferably 0.20 or more. When the maximum value of the loss factor at an excitation frequency of 2000 to 6000 Hz at 20°C is less than 0.05, sound insulation property near room temperature tends to be degraded.

As a method of setting the maximum value of the loss factor at an excitation frequency of 2000 to 6000 Hz at 20°C in the laminated glass obtained by sandwiching the laminate of the present invention between two glass plates and subjecting a treatment thereto at a temperature of 120°C or higher for at least 20 minutes to 0.05 or more, a method of preparing a laminate in which the layer (1) and/or the layer (2) contain a polyvinyl acetal, a method of setting the total amount of the plasticizers contained in the layer (1) and the layer (2) to 20 parts by mass or more in a case where the total amount of the thermoplastic resins contained in the layer (1) and the layer (2) is considered as 100 parts by mass, and the like are exemplified.

A laminated glass obtained by using the laminate of the present invention as an interlayer film for laminated glass also constitutes the present invention. Such a laminated glass can be produced by a conventionally known method. For example, a method using a vacuum laminator, a method using a vacuum bag, a method using a vacuum ring, a method using a nip roll, and the like are exemplified. In addition, a method is also exemplified in which temporarily pressure bonding is performed by the above-described method, and then the obtained product is put into an autoclave and subjected to final pressure bonding. In the case of performing the treatment in an autoclave, regarding the condition thereof, for example, it is preferable to perform the thermal treatment at 100 to 150°C and 1.0 to 1.3 MPa for 10 to 120 minutes. In particular, in a case where the laminate of the present invention is used as an interlayer film for laminated glass that is excellent in sound insulation property, it is preferable to use a laminate in which a loss factor at 20°C or 40°C and an excitation frequency 2000 to 6000 Hz is 0.15 or more, preferably 0.20 or more, in a case where a laminated glass is produced by sandwiching the laminate of the present invention between two glass plates to be temporarily pressure-bonded, and then performing the thermal treatment to the obtained product in an autoclave at 100 to 150°C and 1.0 to 1.3 MPa for 10 to 120 minutes. In addition, similarly, it is preferable to use a laminate in which a haze of a laminated glass in the above-described condition is 0.01% to 1.0%.

In the laminate of the present invention, in a case where a laminated glass is obtained by melt-kneading the laminate at 150°C for 5 minutes, then molding the laminate into a sheet shape having a thickness of 0.8 mm, and sandwiching the sheet-shaped laminate between two glass plates, the haze of the laminated glass is preferably less than 3%, more preferably less than 1%, and further preferably less than 0.5%. When the haze of the laminated glass is more than 3%, the transparency of the laminated glass tends to be degraded.

As a method of setting the haze of the laminated glass to less than 3%, in a case where the thermoplastic resin (I) is the polyvinyl acetal (1) and the thermoplastic resin (II) is the polyvinyl acetal (2), a method of setting |H(1) - H(2)| to 20 mol% or less, a method of setting |A(1) - A(2)| to 20 mol% or less, a method of setting |VE(1) - VE(2)| to 20 mol% or less, a method of setting both P(1) and P(2) to 1100 or more, a method of setting |n - m| to 2 or less, a method of setting $Y_i$ - $X_i$ to 0 or more, and the like are exemplified.

Examples

Hereinafter, the present invention will be described in more detail by means of Examples and the like, but the present invention is not limited to these Examples.

[Evaluation Method]

(Evaluation of Physical Properties of Thermoplastic Resin)

The average acetalization degree, the average amount of the residual vinyl ester group, and the average amount of the residual hydroxyl group of PVB-1 to PVB-4 obtained in Production Examples 1 to 4 were measured in accordance with JIS K 6728: 1977.

The hydroxyl values of PVB-1 to PVB-4 obtained in Production Examples 1 to 4 were measured in accordance with JIS K 1557: 2007.

The ester values of PVB-1 to PVB-4 obtained in Production Examples 1 to 4 were measured in accordance with JIS K 0070: 1992. The measurement results of the average acetalization degree, the average amount of the residual vinyl ester group, the average amount of the residual hydroxyl group, the hydroxyl value, and the ester value are shown in Table 1.

(Evaluation of Flexibility of Laminate: Measurement of $S_1$, $S_2$, and $S_3$)

Evaluation of flexibility of laminates obtained in Present Examples and Comparative Examples was performed. First, the laminate was cut into a size of 1 cm × 10 cm and subjected to a tensile test using Autograph (manufactured by SHIMADZU CORPORATION, AG-IS) at 23°C, a distance between chucks of 50 mm, and 100 mm/min, and then a stress $S_1$ (MPa) at 10% elongation of the laminate at the initial stage of production was measured. In addition, the produced laminate was stored at 23°C for 5 weeks, then cut into a size of 1 cm × 10 cm, and subjected to the tensile test using Autograph at 23°C, a distance between chucks of 50 mm, and a speed of 100 mm/min, and then a stress $S_2$ (MPa) at 10% elongation was measured. Further, the produced laminate was sandwiched with two PET films and the obtained product was pressed at a temperature of 30°C and a load of 100 kg/cm$^2$ for 10 minutes using a press machine. Furthermore, the outer side thereof was sandwiched with two float glass plates and the obtained product was treated at 140°C for 30 minutes using an autoclave for laminated glass. The laminate subjected to the thermal treatment was cooled to 23°C for 60 minutes and stored without any change under the atmosphere of 23°C and 50% RH for 5 weeks. The laminate after the treatment was cut into a size of 1 cm × 10 cm, subjected to the tensile test using Autograph at 23°C, a distance between chucks of 50 mm, and 100 mm/min, and then a stress $S_3$ (MPa) at 10% elongation was measured. Incidentally, as the stress at 10% elongation is lower, it can be said that the laminate is excellent in flexibility. Thus, the laminate having a low stress at 10% elongation is suitable in a case where the laminate is used as an interlayer film for laminated glass, from the viewpoint of exhibiting safety performance.

(Measurement of Difference in Cloud Point)

In Present Examples and Comparative Examples, 9 parts by mass of the polyvinyl butyral used in the layer (1) was dissolved in 100 parts by mass of the plasticizer A at 150°C to obtain a colorless and transparent solution. The temperature of the obtained solution was decreased under stirring, and a temperature at which a part of the solution becomes white cloudy was regarded as a cloud point. In addition, 9 parts by mass of the polyvinyl butyral used in the layer (1) was dissolved in 100 parts by mass of the plasticizer B at 150°C to obtain a colorless and transparent solution. The temperature of the obtained solution was decreased under stirring, and a temperature at which a part of the solution becomes white cloudy was regarded as a cloud point.

(Measurement of Storage Elastic Modulus)

Regarding the layer (1) constituting the laminate obtained in each of Present Examples and Comparative Examples, the storage elastic modulus was measured according to JIS K 7244-4: 1999 under the conditions of 20°C, a frequency of 0.3 Hz, a width of 3 mm, and a distance between chucks of 20 mm.

(Measurement of ten point Average Roughness in Surface of Laminate)

Regarding the laminate obtained in each of Present Examples and Comparative Examples, the ten point average roughness Rz in the surface of the laminate was obtained using a surface roughness meter (manufactured by Mitutoyo Corporation, SJ-310) in accordance with JIS B 0601: 1994. The ten point average roughness Rz refers to a value obtained by extracting only a sampling length from a roughness curve in the direction of the mean line thereof, determining the sum of the average of the absolute values of the heights of the five highest peaks and the average of the absolute values of the depths of the five lowest valleys, the heights and depths being measured from the mean line in the extracted region in the direction of vertical magnification; and expressing the resultant value in micrometers ($\mu$m).

(Evaluation of Migration Property of Plasticizer When Laminate Is Stored)

Regarding the laminates of Present Examples and Comparative Examples, the migration property of the plasticizer when the laminate is stored was evaluated. First, the laminate was stored at 23°C and 50% RH for 1 week. Thereafter, in order to measure the amount of the plasticizer contained in each layer, the layer (1) and the layer (2) were peeled off and dissolved in deuterated DMSO at a concentration of 3% (internal standard TMS) respectively, and measurement of $^1$H-NMR (integration number of 256) was carried out at 23°C using FT-NMR (manufactured by JEOL Ltd., JMTC-400/54/SS).

From the obtained measurement result, the content of the plasticizer A and the content of the plasticizer B contained in the layer (1) when the total amount of the polyvinyl acetal (1) contained in the layer (1) is considered as 100 parts by mass were respectively calculated. The calculated contents of the plasticizer A and the plasticizer B were added together to calculate the total amount $X_{iv}$ of the plasticizers contained in the layer (1). In addition, also regarding the layer (2), similarly, the content of each of the plasticizer A and the plasticizer B and the total amount $Y_{iv}$ of the plasticizers were calculated.

The content of each of the plasticizer A and the plasticizer B contained in the layer (1) and the total amount $X_{ii}$ of the plasticizers were calculated by the same method as described above, except that the laminate obtained in each of Present Examples and Comparative Examples was stored at 23°C and 50% RH for 5 weeks. In addition, also regarding the layer (2), similarly, the content of each of the plasticizer A and the plasticizer B and the total amount $Y_{ii}$ of the plasticizers were calculated.

(Evaluation of Migration Property of Plasticizer after Thermal Treatment of Laminate)

The laminate obtained in each of Present Examples and Comparative Examples was sandwiched with two PET films and the obtained product was pressed at a temperature of 30°C and a load of 100 kg/cm$^2$ for 10 minutes using a press machine. Further, the outer side thereof was sandwiched with two float glass plates and the obtained product was treated at 140°C for 30 minutes using an autoclave for laminated glass. The obtained laminated glass was cooled to 23°C for 60 minutes and stored without any change under the atmosphere of 23°C and 50% RH for 5 weeks.

Thereafter, in order to measure the amount of the plasticizer contained in each layer, the layer (1) and the layer (2) were peeled off and dissolved in deuterated DMSO at a concentration of 3% (internal standard TMS) respectively, and measurement of $^1$H-NMR (integration number of 256) was carried out at 23°C using FT-NMR.

From the obtained measurement result, the contents of the plasticizer A and the plasticizer B contained in the layer (1) when the total amount of the polyvinyl acetal (1) is considered as 100 parts by mass were respectively calculated. The calculated contents of the plasticizer A and the plasticizer B were added together to calculate the total amount $X_{iii}$ of the plasticizers contained in the layer (1). In addition, also regarding the layer (2), similarly, the content of each of the plasticizer A and the plasticizer B and the total amount $Y_{iii}$ of the plasticizers were calculated.

Incidentally, the total amount of the contents of the plasticizer A and the plasticizer B contained in the layer (1) in a case where the total amount of the polyvinyl acetal (1) contained in the layer (1) at the initial stage is considered as 100 parts by mass was designated as Xi, and the total amount of the contents of the plasticizer A and the plasticizer B contained in the layer (2) in a case where the total amount of the polyvinyl acetal (2) contained in the layer (2) at the initial stage is considered as 100 parts by mass was designated as $Y_i$.

(Evaluation of Autohesion Property of Laminate)

Regarding the laminate obtained in each of Present Examples and Comparative Examples, autohesion property was evaluated. First, the laminate immediately after being produced was cut into a size of 10 cm × 3 cm to produce two laminate pieces. The two laminate pieces were superimposed, a weight of 6 kg was placed thereon, and a treatment was performed thereto under the conditions of 23°C and 50% RH for 24 hours. The two laminate pieces after the treatment were subjected to a T-peel strength test at a speed of 100 mm/min using Autograph. A value obtained by dividing the maximum value of peeling force by a width of the laminate piece (3 cm) was regarded as autohesion force (N/3 cm). The same test was performed 5 times in total, and an average value thereof was regarded as average autohesion force (N/3 cm).

In Present Examples and Comparative Examples, also regarding the laminate stored under the atmosphere of 23°C and 50% RH for 5 weeks after production thereof, the average autohesion force was measured by the same method as described above.

(Measurement of Temperature at Which tanδ Becomes Maximal)

In Present Examples and Comparative Examples, compositions used in the layer (1) and the layer (2) were respectively pressed at a temperature of 120°C and a load of 100 kgf/cm$^2$ for 10 minutes using a hot press machine (manufactured by SHINTO Metal Industries Corporation, SFA-37) to produce samples having a thickness of 0.8 mm. These samples were respectively cut into a width of 3 mm to obtain samples for dynamic viscoelasticity measurement. The samples for measurement were analyzed using a dynamic viscoelasticity apparatus (manufactured by UBM Co., Ltd., Rheogel-E4000) according to JIS K 7244-4: 1999 at a distance between chucks of 20 mm, a frequency of 0.3 Hz, a displacement of 75.9 μm, and an automatic static load of 26 g in a tension mode while the temperature was increased from -50°C to 120°C at 3°C/min.

(Production of Kneaded Product of Laminate and Measurement of Haze of Laminated Glass)

The laminate obtained in each of Present Examples and Comparative Examples was melt-kneaded at 150°C for 5 minutes to produce a kneaded product. The obtained kneaded product was subjected to hot pressing at a temperature of 150°C and a load of 100 kgf/cm$^2$ for 30 minutes to be molded in a sheet shape having a thickness of 0.8 mm. The obtained sheet was sandwiched with two float glass plates having a thickness of 3 mm, the obtained product was temporarily pressure-bonded in a vacuum bag, and then finally pressure-bonded in an autoclave while being treated at 135°C and 1.2 MPa for 60 minutes to thereby obtain a laminated glass without air bubbles. The haze of the obtained laminated glass was measured using a haze meter HZ-1 (manufactured by Suga Test Instruments Co., Ltd.) according to JIS K 7105: 1981.

(Measurement of Maximum Value of Loss Factor)

The laminate obtained in each of Present Examples and Comparative Examples was sandwiched with glass having a size of 50 mm × 300 mm × 3 mm, and temporarily pressure-bonded in a vacuum bag, and then finally pressure-bonded in an autoclave while being treated at 135°C and 1.2 MPa for 60 minutes to thereby obtain a laminated glass without air bubbles. The laminated glass was vibrated at 20°C using a vibrator (manufactured by EMIC corporation., Small Vibrator 512-A) in a range of 100 to 10000 Hz. A frequency response function at this time was detected by an FFT analyzer (manufactured by ONO SOKKI CO., LTD., DS-2100), and the maximum value of a loss factor at 2000 to 6000 Hz was calculated using servo analysis software (manufactured by ONO SOKKI CO., LTD., DS-0242). Incidentally, larger loss factor means that the laminated glass has excellent sound insulation performance.

(Measurement of Optical Distortion of Laminated Glass)

The absence or presence of optical distortion in the laminated glass obtained in each of Present Examples and Comparative Examples were confirmed by visual inspection.

[Polyvinyl Butyral]

(Production Example 1)

Into a 5 L glass vessel equipped with a reflux condenser, a thermometer, and an anchor type stirring wing, 4050 g of ion exchange water and 330 g of polyvinyl alcohol (PVA-1: polymerization degree: 1700, saponification degree: 99 mol%) were charged, and polyvinyl alcohol was completely dissolved by increasing the temperature to 95°C. The obtained solution was gradually cooled to 10°C over about 30 minutes under stirring at 160 rpm, 189 g of n-butylaldehyde and 200 mL of aqueous solution of 20% hydrochloric acid were then added, and a butyralization reaction was carried out for 50 minutes. Thereafter, the temperature was increased to 65°C over 60 minutes, maintained at 65°C for 120 minutes, and then cooled to room temperature. The obtained resin was washed with ion exchange water, added with an aqueous solution of sodium hydroxide to neutralize the remaining acid, and further washed with an excess amount of ion exchange water and dried to obtain polyvinyl butyral (PVB-1).

(Production Example 2)

PVB-2 was obtained in the same manner as in Production Example 1, except that 330 g of polyvinyl alcohol (PVA-2: polymerization degree: 1700, saponification degree: 92 mol%) was charged instead of PVA-1 and the amount of n-butylaldehyde used was changed to 195 g.

(Production Example 3)

PVB-3 was obtained in the same manner as in Production Example 1, except that the amount of n-butylaldehyde used was changed to 165 g.

(Production Example 4)

PVB-4 was obtained in the same manner as in Production Example 1, except that the amount of n-butylaldehyde used was changed to 139 g.

[Table 1]

| | Polymerization degree | Average acetalization degree (mol%) | Average amount of residual vinyl ester group (mol%) | Average amount of residual hydroxyl group (mol%) | Hydroxyl value (mgKOH/g) | Ester value (mgKOH/g) |
|---|---|---|---|---|---|---|
| PVB-1 | 1700 | 69.1 | 1.0 | 29.9 | 264 | 9 |
| PVB-2 | 1700 | 75.0 | 6.2 | 18.8 | 156 | 51 |
| PVB-3 | 1700 | 60.5 | 1.0 | 38.5 | 351 | 9 |
| PVB-4 | 1700 | 51.0 | 1.0 | 48.0 | 458 | 10 |

[Plasticizer A and Plasticizer B]

The plasticizer A and the plasticizer B used in Present Examples and Comparative Examples are shown in Table 2 and Table 3, respectively.

[Table 2]

| | | Compound name | HV(A) (mgKOH/g) | Number average molecular weight |
|---|---|---|---|---|
| Plasticizer A-1 | Bisphenol A ethylene oxide adduct (addition of three molecules on average of ethylene oxide to one molecule of bisphenol A) | 279 | 402 |
| Plasticizer A-2 | Bisphenol A ethylene oxide adduct (addition of five molecules on average of ethylene oxide to one molecule of bisphenol A) | 216 | 518 |
| Plasticizer A-3 | Bisphenol A ethylene oxide adduct (addition of ten molecules on average of ethylene oxide to one molecule of bisphenol A) | 139 | 808 |
| Plasticizer A-4 | Polyester diol of alternating copolymer of adipic acid and 3-methyl-1,5-pentanediol (number average molecular weight: 500) | 224 | 500 |
| Plasticizer A-5 | Polyester diol of alternating copolymer of adipic acid and 3-methyl-1,5-pentanediol (number average molecular weight: 900) | 124 | 900 |
| Plasticizer A-6 | Polycaprolactone diol (number average molecular weight: 500) | 224 | 500 |
| Plasticizer A-7 | Polycaprolactone diol (number average molecular weight: 800) | 140 | 800 |
| Plasticizer A-8 | Polycaprolactone monool (number average molecular weight: 800) | 70 | 800 |
| Plasticizer A-9 | Castor oil | 160 | 910 |
| Plasticizer A-10 | Polypropylene glycol (number average molecular weight: 500) | 224 | 500 |

[Table 3]

| | Compound name | HV(B) (mgKOH/g) | Number average molecular weight |
|---|---|---|---|
| Plasticizer B-1 | Triethylene glycol di-2-ethylhexanoate | <5 | 402 |
| Plasticizer B-2 | Dihexyl adipate | <5 | 314 |
| Plasticizer B-3 | Di(2-(2-butoxy)ethoxy)ethyl adioate | <5 | 434 |
| Plasticizer B-4 | Dioctyl phthalate | <5 | 390 |

(Example 1 as a Reference Example, not according to the invention )

(Production of Layer (1))

100 parts by mass of PVB-1 and 25 parts by mass of plasticizer B-1 were prepared and melt-kneaded at 150°C for 5 minutes using Laboplast Mill (manufactured by Toyo Seiki Seisaku-sho, Ltd., 20R200) to obtain a composition. The obtained composition was sandwiced with a flat release film and a release sheet having an embossment shape (Rz = 40 $\mu$m) and pressed at a temperature of 150°C and a load of 100 kgf/cm$^2$ for 10 minutes using a hot press machine to produce the layer (1) having embossment (Rz = 40 $\mu$m) formed on one surface and a thickness of 0.1 mm.

(Production of Layer (2))

100 parts by mass of PVB-1, 97 parts by mass of plasticizer A-1, and 35 parts by mass of plasticizer B-1 were prepared and melt-kneaded at 150°C for 5 minutes using Laboplast Mill to obtain a composition. The obtained composition was pressed at a temperature of 120°C and a load of 100 kgf/cm$^2$ for 10 minutes using a hot press machine to produce the layer (2) having a thickness of 0.6 mm.

(Production of Laminate)

A laminate was obtained by superimposing the layer (1), the layer (2), and the layer (1) in this order (the layer (1) was superimposed such that the surface thereof having no embossment formed thereon was in contact with the layer (2)) and pressing the obtained product at a temperature of 30°C and a load of 100 kgf/cm$^2$ for 10 minutes using a press machine. The compositions and the thicknesses of the layer (1) and the layer (2) are shown in Table 4-1.

(Examples 2 to 18 and 20 to 27 as Reference Examples which are not according to the invention and Example 19 according to the invention and Comparative Examples 1 to 4)

Laminates of Examples 2 to 27 and Comparative Examples 1 to 4 were produced by the same method as in Example 1, except that the compositions and the thicknesses of the layer (1) and the layer (2) were changed as described in Table 4-1 or Table 4-2.

Note that Examples 2-18 and 20-27 are reference Examples, not according to the invention.

[Table 4-1]

| | Layer (1) | | | | | | Layer (2) | | | | | |
|---|---|---|---|---|---|---|---|---|---|---|---|---|
| | Thermoplastic resin (100 parts by mass) | Plasticizer A Type | Plasticizer A Amount (parts by mass) | Plasticizer B Type | Plasticizer B Amount (parts by mass) | Thickness (mm) | Thermoplastic resin (100 parts by mass) | Plasticizer A Type | Plasticizer A Amount (parts by mass) | Plasticizer B Type | Plasticizer B Amount (parts by mass) | Thickness (mm) |
| Example 1 | PVB-1 | - | - | Plasticizer B-1 | 25 | 0.1 | PVB-1 | Plasticizer A-1 | 97 | Plasticizer B-1 | 35 | 0.6 |
| Example 2 | PVB-1 | - | - | Plasticizer B-1 | 25 | 0.1 | PVB-1 | Plasticizer A-1 | 50 | Plasticizer B-1 | 45 | 0.6 |
| Example 3 | PVB-1 | - | - | Plasticizer B-1 | 25 | 0.1 | PVB-1 | Plasticizer A-2 | 75 | Plasticizer B-1 | 35 | 0.6 |
| Example 4 | PVB-1 | - | - | Plasticizer B-1 | 25 | 0.1 | PVB-1 | Plasticizer A-3 | 60 | Plasticizer B-1 | 35 | 0.6 |
| Example 5 | PVB-1 | - | - | Plasticizer B-1 | 25 | 0.1 | PVB-1 | Plasticizer A-4 | 25 | Plasticizer B-1 | 35 | 0.6 |
| Example 6 | PVB-1 | - | - | Plasticizer B-1 | 25 | 0.1 | PVB-1 | Plasticizer A-5 | 45 | Plasticizer B-1 | 35 | 0.6 |
| Example 7 | PVB-1 | - | - | Plasticizer B-1 | 25 | 0.1 | PVB-1 | Plasticizer A-6 | 25 | Plasticizer B-1 | 35 | 0.6 |
| Example 8 | PVB-1 | - | - | Plasticizer B-1 | 25 | 0.1 | PVB-1 | Plasticizer A-7 | 45 | Plasticizer B-1 | 35 | 0.6 |
| Example 9 | PVB-1 | - | - | Plasticizer B-1 | 25 | 0.1 | PVB-1 | Plasticizer A-8 | 45 | Plasticizer B-1 | 35 | 0.6 |
| Example 10 | PVB-1 | - | - | Plasticizer B-1 | 25 | 0.1 | PVB-1 | Plasticizer A-9 | 30 | Plasticizer B-1 | 35 | 0.6 |
| Example 11 | PVB-1 | - | - | Plasticizer B-1 | 25 | 0.1 | PVB-1 | Plasticizer A-10 | 25 | Plasticizer B-1 | 35 | 0.6 |
| Example 12 | PVB-1 | - | - | Plasticizer B-2 | 25 | 0.1 | PVB-1 | Plasticizer A-1 | 97 | Plasticizer B-2 | 28 | 0.6 |
| Example 13 | PVB-1 | - | - | Plasticizer B-3 | 25 | 0.1 | PVB-1 | Plasticizer A-1 | 97 | Plasticizer B-3 | 35 | 0.6 |

| | Layer (1) | | | | | Layer (2) | | | | | |
|---|---|---|---|---|---|---|---|---|---|---|---|
| | Thermoplastic resin (100 parts by mass) | Plasticizer A | | Plasticizer B | | Thickness (mm) | Thermoplastic resin (100 parts by mass) | Plasticizer A | | Plasticizer B | | Thickness (mm) |
| | | Type | Amount (parts by mass) | Type | Amount (parts by mass) | | | Type | Amount (parts by mass) | Type | Amount (parts by mass) | |
| Example 14 | PVB-1 | - | - | Plasticizer B-4 | 25 | 0.1 | PVB-1 | Plasticizer A-1 | 97 | Plasticizer B-4 | 35 | 0.6 |
| Example 15 | PVB-1 | - | - | Plasticizer B-1 | 25 | 0.05 | PVB-1 | Plasticizer A-1 | 76 | Plasticizer B-1 | 32 | 0.7 |
| Example 16 | PVB-1 | - | - | Plasticizer B-1 | 25 | 0.12 | PVB-1 | Plasticizer A-1 | 115 | Plasticizer B-1 | 36 | 0.56 |
| Example 17 | PVB-1 | - | - | Plasticizer B-1 | 25 | 0.15 | PVB-1 | Plasticizer A-1 | 145 | Plasticizer B-1 | 37 | 0.5 |

[Table 4-2]

| | Layer (1) | | | | | | Layer(2) | | | | | |
|---|---|---|---|---|---|---|---|---|---|---|---|---|
| | Thermoplastic resin (100 parts by mass) | Plasticizer A | | Plasticizer B | | Thickness (mm) | Thermoplastic resin (100 parts by mass) | Plasticizer A | | Plasticizer B | | Thickness (mm) |
| | | Type | Amount (parts by mass) | Type | Amount (parts by mass) | | | Type | Amount (parts by mass) | Type | Amount (parts by mass) | |
| Example 18 | PVB-1 | Plasticizer A-1 | 40 | - | - | 0.1 | PVB-1 | Plasticizer A-1 | 97 | Plasticizer B-1 | 35 | 0.6 |
| Example 19 | PVB-1 | Plasticizer A-1 | 20 | Plasticizer B-1 | 15 | 0.1 | PVB-1 | Plasticizer A-1 | 97 | Plasticizer B-1 | 35 | 0.6 |
| Example 20 | PVB-1 | - | - | Plasticizer B-1 | 31 | 0.1 | PVB-1 | Plasticizer A-1 | 97 | Plasticizer B-1 | 33 | 0.6 |
| Example 21 | PVB-1 | - | - | Plasticizer B-2 | 25 | 0.1 | PVB-1 | Plasticizer A-1 | 97 | Plasticizer B-2 | 35 | 0.6 |
| Example 22 | PVB-1 | - | - | Plasticizer B-3 | 25 | 0.1 | PVB-1 | Plasticizer A-1 | 97 | Plasticizer B-3 | 35 | 0.6 |
| Example 23 | PVB-1 | - | - | Plasticizer B-4 | 25 | 0.1 | PVB-1 | Plasticizer A-1 | 97 | Plasticizer B-4 | 35 | 0.6 |
| Example 24 | PVB-2 | - | - | Plasticizer B-1 | 25 | 0.1 | PVB-2 | Plasticizer A-1 | 97 | Plasticizer B-1 | 35 | 0.6 |
| Example 25 | PVB-3 | - | - | Plasticizer B-2 | 25 | 0.1 | PVB-3 | Plasticizer A-1 | 97 | Plasticizer B-2 | 35 | 0.6 |
| Example 26 | PVB-4 | - | - | Plasticizer B-2 | 25 | 0.1 | PVB-4 | Plasticizer A-1 | 97 | Plasticizer B-2 | 35 | 0.6 |
| Example 27 | PVB-1 | - | - | Plasticizer B-1 | 25 | 0.1 | PVB-2 | Plasticizer A-1 | 97 | Plasticizer B-1 | 35 | 0.6 |
| Comparative Example 1 | PVB-1 | - | - | Plasticizer B-1 | 25 | 0.1 | PVB-1 | - | - | Plasticizer B-1 | 60 | 0.6 |
| Comparative Example 2 | PVB-1 | - | - | Plasticizer B-2 | 25 | 0.1 | PVB-1 | - | - | Plasticizer B-2 | 60 | 0.6 |
| Comparative Example 3 | PVB-1 | - | - | Plasticizer B-2 | 25 | 0.1 | PVB-1 | - | - | Plasticizer B-2 | 35 | 0.6 |

(continued)

| | Layer (1) | | | | | | Layer(2) | | | | | |
|---|---|---|---|---|---|---|---|---|---|---|---|---|
| | Thermoplastic resin (100 parts by mass) | Plasticizer A Type | Plasticizer A Amount (parts by mass) | Plasticizer B Type | Plasticizer B Amount (parts by mass) | Thickness (mm) | Thermoplastic resin (100 parts by mass) | Plasticizer A Type | Plasticizer A Amount (parts by mass) | Plasticizer B Type | Plasticizer B Amount (parts by mass) | Thickness (mm) |
| Comparative Example 4 | PVB-1 | - | - | Plasticizer B-1 | 25 | 0.1 | PVB-2 | - | - | Plasticizer B-1 | 60 | 0.6 |

Regarding the laminates of Examples 1 to 27 and Comparative Examples 1 to 4, the absolute value |H(1) - H(2)| of the difference between the average amounts of the residual hydroxyl groups, the absolute value |A(1) - A(2)| of the difference between the average acetalization degrees, the absolute value |VE(1) - VE(2)| of the difference between the average amounts of the residual vinyl ester groups, and the absolute value |n - m| of difference in the number of carbon atoms in aldehyde as a raw material in respective polyvinyl acetals contained in the layer (1) or the layer (2) and the difference in content between the plasticizers with respect to 100 parts by mass of each thermoplastic resin contained in the layer (1) or the layer (2) ($Y_i - X_i$) are shown in Table 5.

Note that Examples 2-18 and 20-27 are reference Examples, not according to the invention.

[Table 5]

| | |H(1)-H(2)| | |A(1)-A(2)| | |VE(1)-VE(2)| | |n-m| | $Y_i$-$X_i$ |
|---|---|---|---|---|---|
| Example 1 | 0 | 0 | 0 | 0 | 107 |
| Example 2 | 0 | 0 | 0 | 0 | 70 |
| Example 3 | 0 | 0 | 0 | 0 | 85 |
| Example 4 | 0 | 0 | 0 | 0 | 70 |
| Example 5 | 0 | 0 | 0 | 0 | 35 |
| Example 6 | 0 | 0 | 0 | 0 | 55 |
| Example 7 | 0 | 0 | 0 | 0 | 35 |
| Example 8 | 0 | 0 | 0 | 0 | 55 |
| Example 9 | 0 | 0 | 0 | 0 | 55 |
| Example 10 | 0 | 0 | 0 | 0 | 40 |
| Example 11 | 0 | 0 | 0 | 0 | 35 |
| Example 12 | 0 | 0 | 0 | 0 | 100 |
| Example 13 | 0 | 0 | 0 | 0 | 107 |
| Example 14 | 0 | 0 | 0 | 0 | 107 |
| Example 15 | 0 | 0 | 0 | 0 | 83 |
| Example 16 | 0 | 0 | 0 | 0 | 126 |
| Example 17 | 0 | 0 | 0 | 0 | 157 |
| Example 18 | 0 | 0 | 0 | 0 | 92 |
| Example 19 | 0 | 0 | 0 | 0 | 97 |
| Example 20 | 0 | 0 | 0 | 0 | 99 |
| Example 21 | 0 | 0 | 0 | 0 | 107 |
| Example 22 | 0 | 0 | 0 | 0 | 107 |
| Example 23 | 0 | 0 | 0 | 0 | 107 |
| Example 24 | 0 | 0 | 0 | 0 | 107 |
| Example 25 | 0 | 0 | 0 | 0 | 107 |
| Example 26 | 0 | 0 | 0 | 0 | 107 |
| Example 27 | 11.3 | 5.9 | 5.2 | 0 | 107 |
| Comparative Example 1 | 0 | 0 | 0 | 0 | 35 |
| Comparative Example 2 | 0 | 0 | 0 | 0 | 35 |
| Comparative Example 3 | 0 | 0 | 0 | 0 | 10 |
| Comparative Example 4 | 11.3 | 5.9 | 5.2 | 0 | 35 |

In addition, regarding the laminates of Examples 1 to 27 and Comparative Examples 1 to 4, $S_1$, $S_2$, and $S_3$ were measured according to the aforementioned method for evaluating the flexibility of the laminate. The obtained results of values of $S_1$, $S_2$, $S_3$, $S_2/S_1$, $S_1 - S_2$, $S_3/8_1$, $S_1 - S_3$, and $S_2 - S_3$ are shown in Table 6. Further, the results of the stress $S_1$ at 10% elongation at the initial state of production of the laminate and the stress $S_3$ at 10% elongation after the laminate is treated at 140°C and then stored at 23°C are shown in Table 10-1 and Table 10-2.

Note that Examples 2-18 and 20-27 are reference Examples, not according to the invention.

[Table 6]

| | Stress at 10% elongation (MPa) | | | Formula (1) | | Formula (2) | | Formula (3) |
|---|---|---|---|---|---|---|---|---|
| | $S_1$ | $S_2$ | $S_3$ | $S_2/S_1$ | $S_1-S_2$ | $S_3/S_1$ | $S_1/S_3$ | $S_2-S_3$ |
| Example 1 | 1.9 | 1.8 | 0.2 | 0.95 | 0.10 | 0.11 | 1.70 | 1.60 |
| Example 2 | 2.0 | 1.8 | 0.2 | 0.90 | 0.20 | 0.10 | 1.80 | 1.60 |
| Example 3 | 1.9 | 1.8 | 0.2 | 0.95 | 0.10 | 0.11 | 1.70 | 1.60 |
| Example 4 | 1.8 | 1.6 | 0.2 | 0.89 | 0.20 | 0.11 | 1.60 | 1.40 |
| Example 5 | 1.9 | 1.6 | 0.2 | 0.84 | 0.30 | 0.11 | 1.70 | 1.40 |
| Example 6 | 1.9 | 1.6 | 0.2 | 0.84 | 0.30 | 0.11 | 1.70 | 1.40 |
| Example 7 | 1.8 | 1.6 | 0.2 | 0.89 | 0.20 | 0.11 | 1.60 | 1.40 |
| Example 8 | 1.9 | 1.7 | 0.2 | 0.89 | 0.20 | 0.11 | 1.70 | 1.50 |
| Example 9 | 1.9 | 1.4 | 0.2 | 0.74 | 0.50 | 0.11 | 1.70 | 1.20 |
| Example 10 | 2.1 | 1.9 | 0.2 | 0.90 | 0.20 | 0.10 | 1.90 | 1.70 |
| Example 11 | 1.9 | 1.4 | 0.2 | 0.74 | 0.50 | 0.11 | 1.70 | 1.20 |
| Example 12 | 2.0 | 1.7 | 0.2 | 0.85 | 0.30 | 0.10 | 1.80 | 1.50 |
| Example 13 | 2.1 | 1.9 | 0.2 | 0.90 | 0.20 | 0.10 | 1.90 | 1.70 |
| Example 14 | 1.9 | 1.6 | 0.2 | 0.84 | 0.30 | 0.11 | 1.70 | 1.40 |
| Example 15 | 1.3 | 1.0 | 0.2 | 0.77 | 0.30 | 0.15 | 1.10 | 0.80 |
| Example 16 | 2.2 | 2.0 | 0.3 | 0.91 | 0.20 | 0.14 | 1.90 | 1.70 |
| Example 17 | 2.6 | 2.3 | 0.3 | 0.88 | 0.30 | 0.12 | 2.30 | 2.00 |
| Example 18 | 1.9 | 1.6 | 0.3 | 0.84 | 0.30 | 0.16 | 1.60 | 1.30 |
| Example 19 | 1.9 | 1.4 | 0.2 | 0.74 | 0.50 | 0.11 | 1.70 | 1.20 |
| Example 20 | 1.9 | 1.7 | 0.2 | 0.89 | 0.20 | 0.11 | 1.70 | 1.50 |
| Example 21 | 1.7 | 1.4 | 0.2 | 0.82 | 0.30 | 0.12 | 1.50 | 1.20 |
| Example 22 | 2 | 1.7 | 0.2 | 0.85 | 0.30 | 0.10 | 1.80 | 1.50 |
| Example 23 | 1.9 | 1.6 | 0.2 | 0.84 | 0.30 | 0.11 | 1.70 | 1.40 |
| Example 24 | 1.4 | 1.0 | 0.2 | 0.71 | 0.40 | 0.14 | 1.20 | 0.80 |
| Example 25 | 2.1 | 2.0 | 0.2 | 0.95 | 0.10 | 0.10 | 1.90 | 1.80 |
| Example 26 | 2.5 | 2.3 | 0.2 | 0.92 | 0.20 | 0.08 | 2.30 | 2.10 |
| Example 27 | 1.9 | 1.6 | 0.4 | 0.84 | 0.30 | 0.21 | 1.50 | 1.20 |
| Comparative Example 1 | 1.9 | 0.2 | 0.2 | 0.11 | 1.70 | 0.11 | 1.70 | 0.00 |
| Comparative Example 2 | 1.9 | 0.2 | 0.2 | 0.11 | 1.70 | 0.11 | 1.70 | 0.00 |
| Comparative Example 3 | 1.9 | 1.1 | 1.1 | 0.58 | 0.80 | 0.58 | 0.80 | 0.00 |
| Comparative Example 4 | 1.9 | 0.4 | 0.4 | 0.21 | 1.50 | 0.21 | 1.50 | 0.00 |

Regarding the laminates of Examples 1 to 27 and Comparative Examples 1 to 4, measurement of the difference in cloud point, measurement of the storage elastic modulus of the layer (1), and measurement of the ten point average roughness in the surface of the laminate were performed according to the evaluation methods described above. The evaluation results are shown in Table 7.

Note that Examples 2-18 and 20-27 are reference Examples, not according to the invention.

[Table 7]

| | Difference in cloud point (°C) | Storage elastic modulus of layer (1) (MPa) | Ten point average roughness of laminate ($\mu$m) |
|---|---|---|---|
| Example 1 | > 50°C | $1.8 \times 10^3$ | 40 |
| Example 2 | > 50°C | $1.8 \times 10^3$ | 40 |
| Example 3 | > 50°C | $1.8 \times 10^3$ | 40 |
| Example 4 | > 50°C | $1.8 \times 10^3$ | 40 |
| Example 5 | > 50°C | $1.8 \times 10^3$ | 40 |
| Example 6 | > 50°C | $1.8 \times 10^3$ | 40 |
| Example 7 | > 50°C | $1.8 \times 10^3$ | 40 |
| Example 8 | > 50°C | $1.8 \times 10^3$ | 40 |
| Example 9 | > 50°C | $1.8 \times 10^3$ | 40 |
| Example 10 | > 50°C | $1.8 \times 10^3$ | 40 |
| Example 11 | > 50°C | $1.8 \times 10^3$ | 40 |
| Example 12 | > 50°C | $1.8 \times 10^3$ | 40 |
| Example 13 | > 50°C | $1.8 \times 10^3$ | 40 |
| Example 14 | > 50°C | $1.8 \times 10^3$ | 40 |
| Example 15 | > 50°C | $1.8 \times 10^3$ | 40 |
| Example 16 | > 50°C | $1.8 \times 10^3$ | 40 |
| Example 17 | > 50°C | $1.8 \times 10^3$ | 40 |
| Example 18 | > 50°C | $1.5 \times 10^3$ | 40 |
| Example 19 | > 50°C | $1.8 \times 10^3$ | 40 |
| Example 20 | > 50°C | $1.5 \times 10^3$ | 40 |
| Example 21 | > 50°C | $7.5 \times 10^2$ | 40 |
| Example 22 | > 50°C | $2.0 \times 10^3$ | 40 |
| Example 23 | > 50°C | $1.8 \times 10^3$ | 40 |
| Example 24 | > 50°C | $4.8 \times 10^2$ | 40 |
| Example 25 | > 50°C | $2.1 \times 10^3$ | 40 |
| Example 26 | > 50°C | $2.4 \times 10^3$ | 40 |
| Example 27 | > 50°C | $1.9 \times 10^3$ | 40 |
| Comparative Example 1 | - | $1.9 \times 10^3$ | 40 |
| Comparative Example 2 | - | $7.5 \times 10^2$ | 40 |
| Comparative Example 3 | - | $7.5 \times 10^2$ | 40 |

(continued)

| | Difference in cloud point (°C) | Storage elastic modulus of layer (1) (MPa) | Ten point average roughness of laminate (μm) |
|---|---|---|---|
| Comparative Example 4 | - | $1.8 \times 10^3$ | 40 |

Regarding the laminates of Examples 1 to 27 and Comparative Examples 1 to 4, the evaluation of migration property of the plasticizer was carried out as described in the above-described evaluation method to obtain $X_i$, $X_{ii}$, $X_{iii}$, $X_{iv}$, $Y_i$, $Y_{ii}$, $Y_{iii}$, and $Y_{iv}$. The evaluation results are shown in Table 8-1 and Table 8-4. In addition, values of $Y_i - X_i$, $X_{ii} - X_i$, $Y_i - Y_{ii}$, $X_{iii} - X_i$, $Y_i - Y_{iii}$, $X_{iii} - X_{ii}$, and $Y_{ii} - Y_{ii}$ are shown in Table 9-1 and Table 9-2, and values of $X_{iv} - X_i$, $Y_i - Y_{iv}$, $X_{ii} - X_{iv}$, $Y_{iv} - Y_{ii}$, $X_{iii} - X_{iv}$, and $Y_{iv} - Y_{iii}$ are shown in Table 9-3 and Table 9-4. Incidentally, the total amount of the plasticizer contained in the layer (1) with respect to 100 parts by mass of the thermoplastic resin (I) is designated as Xi parts by mass and the total amount of the plasticizer contained in the layer (2) with respect to 100 parts by mass of the thermoplastic resin (II) is designated as Yi parts by mass. In a case where the laminates obtained in Present Examples and Comparative Examples are stored at 23°C and 50% RH for 1 week, the total amount of the plasticizer contained in the layer (1) with respect to 100 parts by mass of the thermoplastic resin (I) is designated as $X_{iv}$ parts by mass and the total amount of the plasticizer contained in the layer (2) with respect to 100 parts by mass of the thermoplastic resin (II) is designated as $Y_{iv}$ parts by mass. In a case where the laminates obtained in Present Examples and Comparative Examples are stored at 23°C and 50% RH for 5 weeks, the total amount of the plasticizer contained in the layer (1) with respect to 100 parts by mass of the thermoplastic resin (I) is designated as $X_{ii}$ parts by mass and the total amount of the plasticizer contained in the layer (2) with respect to 100 parts by mass of the thermoplastic resin (II) is designated as $Y_{ii}$ parts by mass. In a case where the laminates obtained in Present Examples and Comparative Examples are treated at 140°C for 30 minutes, cooled to 23°C within 1 hour, and stored at 23°C and 50% RH for 5 weeks, the total amount of the plasticizer contained in the layer (1) with respect to 100 parts by mass of the thermoplastic resin (I) is designated as $X_{iii}$ parts by mass and the total amount of the plasticizer contained in the layer (2) with respect to 100 parts by mass of the thermoplastic resin (II) is designated as $Y_{iii}$ parts by mass.

Note that Examples 2-18 and 20-27 are reference Examples, not according to the invention.

[Table 8-1]

| | | Amount of plasticizer in layer (1) (parts by mass) | | | | Xi | Xiv | Xii | Xiii | Amount of plasticizer in layer (2) (parts by mass) | | | | Yi | Yiv | Yii | Yiii |
|---|---|---|---|---|---|---|---|---|---|---|---|---|---|---|---|---|---|
| | | Initial stage | Storage at 23°C | | Storage at 23°C after treatment at 140°C | | | | | Initial stage | Storage at 23°C | | Storage at 23°C after treatment at 140°C | | | | |
| | | | For 1 week | For 5 weeks | | | | | | | For 1 week | For 5 weeks | | | | | |
| Example 1 | Plasticizer A | 0 | 1 | 6 | 60 | 25 | 25 | 29 | 89 | 97 | 96 | 95 | 60 | 132 | 131 | 131 | 90 |
| | Plasticizer B | 25 | 24 | 23 | 29 | | | | | 35 | 35 | 36 | 30 | | | | |
| Example 2 | Plasticizer A | 0 | 1 | 4 | 33 | 25 | 25 | 28 | 71 | 50 | 49 | 48 | 33 | 95 | 94 | 94 | 71 |
| | Plasticizer B | 25 | 24 | 24 | 38 | | | | | 45 | 45 | 46 | 38 | | | | |
| Example 3 | Plasticizer A | 0 | 1 | 6 | 48 | 25 | 25 | 29 | 79 | 75 | 74 | 73 | 48 | 110 | 109 | 109 | 79 |
| | Plasticizer B | 25 | 24 | 23 | 31 | | | | | 35 | 35 | 36 | 31 | | | | |
| Example 4 | Plasticizer A | 0 | 1 | 5 | 40 | 25 | 25 | 29 | 72 | 60 | 60 | 58 | 40 | 95 | 95 | 94 | 72 |
| | Plasticizer B | 25 | 24 | 24 | 32 | | | | | 35 | 35 | 36 | 32 | | | | |
| Example 5 | Plasticizer A | 0 | 1 | 5 | 18 | 25 | 26 | 31 | 50 | 25 | 25 | 24 | 18 | 60 | 60 | 58 | 50 |
| | Plasticizer B | 25 | 25 | 26 | 32 | | | | | 35 | 35 | 34 | 32 | | | | |
| Example 6 | Plasticizer A | 0 | 1 | 3 | 30 | 25 | 26 | 29 | 62 | 45 | 45 | 42 | 30 | 80 | 80 | 76 | 61 |
| | Plasticizer B | 25 | 25 | 26 | 32 | | | | | 35 | 35 | 34 | 31 | | | | |

EP 3 412 450 B1

(continued)

| | | Amount of plasticizer in layer (1) (parts by mass) | | | | Xi | Xiv | Xii | Xiii | Amount of plasticizer in layer (2) (parts by mass) | | | | Yi | Yiv | Yii | Yiii |
|---|---|---|---|---|---|---|---|---|---|---|---|---|---|---|---|---|---|
| | | Initial stage | Storage at 23°C | | Storage at 23°C after treatment at 140°C | | | | | Initial stage | Storage at 23°C | | Storage at 23°C after treatment at 140°C | | | | |
| | | | For 1 week | For 5 weeks | | | | | | | For 1 week | For 5 weeks | | | | | |
| Example 7 | Plasticizer A | 0 | 2 | 5 | 18 | 25 | 27 | 30 | 50 | 25 | 25 | 23 | 19 | 60 | 59 | 57 | 51 |
| | Plasticizer B | 25 | 25 | 25 | 32 | | | | | 35 | 34 | 34 | 32 | | | | |
| Example 8 | Plasticizer A | 0 | 1 | 3 | 30 | 25 | 27 | 29 | 62 | 45 | 45 | 44 | 30 | 80 | 80 | 79 | 62 |
| | Plasticizer B | 25 | 26 | 26 | 32 | | | | | 35 | 35 | 35 | 32 | | | | |
| Example 9 | Plasticizer A | 0 | 3 | 8 | 30 | 25 | 28 | 35 | 62 | 45 | 44 | 42 | 30 | 80 | 79 | 76 | 62 |
| | Plasticizer B | 25 | 25 | 27 | 32 | | | | | 35 | 35 | 34 | 32 | | | | |

[Table 8-2]

**Amount of plasticizer in layer (1) (parts by mass)**

| | | Initial stage | Storage at 23°C — For 1 week | Storage at 23°C — For 5 weeks | Storage at 23°C after treatment at 140°C | Xi | Xiv | Xii | Xiii |
|---|---|---|---|---|---|---|---|---|---|
| Example 10 | Plasticizer A | 0 | 1 | 3 | 21 | 25 | 26 | 28 | 53 |
| | Plasticizer B | 25 | 25 | 25 | 32 | | | | |
| Example 11 | Plasticizer A | 0 | 1 | 6 | 19 | 25 | 26 | 33 | 51 |
| | Plasticizer B | 25 | 25 | 27 | 32 | | | | |
| Example 12 | Plasticizer A | 0 | 1 | 7 | 61 | 25 | 25 | 31 | 88 |
| | Plasticizer B | 25 | 24 | 24 | 27 | | | | |
| Example 13 | Plasticizer A | 0 | 1 | 7 | 60 | 25 | 25 | 30 | 91 |
| | Plasticizer B | 25 | 24 | 23 | 31 | | | | |
| Example 14 | Plasticizer A | 0 | 1 | 5 | 60 | 25 | 25 | 29 | 90 |
| | Plasticizer B | 25 | 24 | 24 | 30 | | | | |
| Example 15 | Plasticizer A | 0 | 2 | 11 | 61 | 25 | 25 | 33 | 91 |
| | Plasticizer B | 25 | 23 | 22 | 30 | | | | |

**Amount of plasticizer in layer (2) (parts by mass)**

| | | Initial stage | Storage at 23°C — For 1 week | Storage at 23°C — For 5 weeks | Storage at 23°C after treatment at 140°C | Yi | Yiv | Yii | Yiii |
|---|---|---|---|---|---|---|---|---|---|
| Example 10 | Plasticizer A | 30 | 30 | 29 | 21 | 65 | 65 | 64 | 53 |
| | Plasticizer B | 35 | 35 | 35 | 32 | | | | |
| Example 11 | Plasticizer A | 25 | 24 | 23 | 18 | 60 | 59 | 57 | 50 |
| | Plasticizer B | 35 | 35 | 34 | 32 | | | | |
| Example 12 | Plasticizer A | 97 | 96 | 95 | 60 | 125 | 124 | 123 | 87 |
| | Plasticizer B | 28 | 28 | 28 | 27 | | | | |
| Example 13 | Plasticizer A | 97 | 96 | 95 | 60 | 132 | 131 | 131 | 91 |
| | Plasticizer B | 35 | 35 | 36 | 31 | | | | |
| Example 14 | Plasticizer A | 97 | 96 | 95 | 60 | 132 | 131 | 131 | 91 |
| | Plasticizer B | 35 | 35 | 36 | 31 | | | | |
| Example 15 | Plasticizer A | 76 | 76 | 75 | 60 | 108 | 108 | 107 | 90 |
| | Plasticizer B | 32 | 32 | 32 | 30 | | | | |

| | | Amount of plasticizer in layer (1) (parts by mass) | | | | Xi | Xiv | Xii | Xiii | Amount of plasticizer in layer (2) (parts by mass) | | | | Yi | Yiv | Yii | Yiii |
|---|---|---|---|---|---|---|---|---|---|---|---|---|---|---|---|---|---|
| | | Initial stage | Storage at 23 C | | Storage at 23°C after treatment at 140°C | | | | | Initial stage | Storage at 23°C | | Storage at 23°C after treatment at 140°C | | | | |
| | | | For 1 week | For 5 weeks | | | | | | | For 1 week | For 5 weeks | | | | | |
| Example 16 | Plasticizer A | 0 | 1 | 7 | 62 | 25 | 25 | 31 | 93 | 115 | 114 | 112 | 63 | 151 | 150 | 149 | 94 |
| | Plasticizer B | 25 | 24 | 24 | 31 | | | | | 36 | 36 | 37 | 31 | | | | |
| Example 17 | Plasticizer A | 0 | 1 | 7 | 61 | 25 | 25 | 30 | 91 | 145 | 144 | 139 | 61 | 182 | 182 | 178 | 91 |
| | Plasticizer B | 25 | 24 | 23 | 30 | | | | | 37 | 38 | 39 | 30 | | | | |

EP 3 412 450 B1

[Table 8-3]

| | | Amount of plasticizer in layer (1) (parts by mass) | | | | | | | | Amount of plasticizer in layer (2) (parts by mass) | | | | | | | |
| | | Initial stage | Storage at 23°C For 1 week | Storage at 23°C For 5 weeks | Storage at 23°C after treatment at 140°C | Xi | Xiv | Xii | Xiii | Initial stage | Storage at 23°C For 1 week | Storage at 23°C For 5 weeks | Storage at 23°C after treatment at 140°C | Yi | Yiv | Yii | Yiii |
|---|---|---|---|---|---|---|---|---|---|---|---|---|---|---|---|---|---|
| Example 18 | Plasticizer A | 40 | 41 | 45 | 72 | 40 | 43 | 51 | 94 | 97 | 96 | 95 | 72 | 132 | 129 | 127 | 93 |
| | Plasticizer B | 0 | 2 | 6 | 22 | | | | | 35 | 33 | 32 | 21 | | | | |
| Example 19 | Plasticizer A | 20 | 21 | 25 | 68 | 35 | 38 | 44 | 97 | 97 | 96 | 95 | 69 | 132 | 131 | 129 | 99 |
| | Plasticizer B | 15 | 17 | 19 | 29 | | | | | 35 | 35 | 34 | 30 | | | | |
| Example 20 | Plasticizer A | 0 | 3 | 9 | 61 | 31 | 34 | 40 | 93 | 97 | 96 | 95 | 61 | 130 | 129 | 128 | 94 |
| | Plasticizer B | 31 | 31 | 31 | 32 | | | | | 33 | 33 | 33 | 33 | | | | |
| Example 21 | Plasticizer A | 0 | 1 | 6 | 60 | 25 | 25 | 30 | 91 | 97 | 96 | 95 | 60 | 132 | 131 | 131 | 91 |
| | Plasticizer B | 25 | 24 | 24 | 31 | | | | | 35 | 35 | 36 | 31 | | | | |
| Example 22 | Plasticizer A | 0 | 2 | 7 | 60 | 25 | 26 | 31 | 90 | 97 | 96 | 96 | 60 | 132 | 131 | 132 | 90 |
| | Plasticizer B | 25 | 24 | 24 | 30 | | | | | 35 | 35 | 36 | 30 | | | | |
| Example 23 | Plasticizer A | 0 | 1 | 7 | 60 | 25 | 26 | 31 | 91 | 97 | 96 | 94 | 60 | 132 | 131 | 130 | 91 |
| | Plasticizer B | 25 | 25 | 24 | 31 | | | | | 35 | 35 | 36 | 31 | | | | |

(continued)

| Example | | Amount of plasticizer in layer (1) (parts by mass) | | | | Xi | Xiv | Xii | Xiii | Amount of plasticizer in layer (2) (parts by mass) | | | | Yi | Yiv | Yii | Yiii |
|---|---|---|---|---|---|---|---|---|---|---|---|---|---|---|---|---|---|
| | | Initial stage | Storage at 23°C | | Storage at 23°C after treatment at 140°C | | | | | Initial stage | Storage at 23°C | | Storage at 23°C after treatment at 140°C | | | | |
| | | | For 1 week | For 5 weeks | | | | | | | For 1 week | For 5 weeks | | | | | |
| Example 24 | Plasticizer A | 0 | 3 | 10 | 60 | 25 | 28 | 36 | 89 | 97 | 96 | 94 | 61 | 132 | 131 | 129 | 91 |
| | Plasticizer B | 25 | 25 | 26 | 29 | | | | | 35 | 35 | 35 | 30 | | | | |

[Table 8-4]

| | Plasticizer | Amount of plasticizer in layer (1) (parts by mass) | | | | | | | | Amount of plasticizer in layer (2) (parts by mass) | | | | | | | |
|---|---|---|---|---|---|---|---|---|---|---|---|---|---|---|---|---|---|
| | | Initial stage | Storage at 23°C For 1 week | Storage at 23°C For 5 weeks | Storage at 23°C after treatment at 140°C | Xi | Xiv | Xii | Xiii | Initial stage | Storage at 23°C For 1 week | Storage at 23°C For 5 weeks | Storage at 23°C after treatment at 140°C | Yi | Yiv | Yii | Yiii |
| Example 25 | Plasticizer A | 0 | 0 | 5 | 62 | 25 | 25 | 29 | 91 | 97 | 96 | 95 | 61 | 132 | 131 | 131 | 90 |
| | Plasticizer B | 25 | 25 | 24 | 29 | | | | | 35 | 35 | 36 | 29 | | | | |
| Example 26 | Plasticizer A | 0 | 1 | 3 | 60 | 25 | 26 | 27 | 89 | 97 | 96 | 96 | 60 | 132 | 131 | 132 | 90 |
| | Plasticizer B | 25 | 25 | 24 | 29 | | | | | 35 | 35 | 36 | 30 | | | | |
| Example 27 | Plasticizer A | 0 | 1 | 7 | 65 | 25 | 25 | 31 | 89 | 97 | 96 | 95 | 58 | 132 | 131 | 131 | 90 |
| | Plasticizer B | 25 | 24 | 24 | 24 | | | | | 35 | 35 | 36 | 32 | | | | |
| Comparative Example 1 | Plasticizer A | 0 | 0 | 0 | 0 | 25 | 47 | 49 | 49 | 0 | 0 | 0 | 0 | 60 | 50 | 49 | 49 |
| | Plasticizer B | 25 | 47 | 49 | 49 | | | | | 60 | 50 | 49 | 49 | | | | |
| Comparative Example 2 | Plasticizer A | 0 | 0 | 0 | 0 | 25 | 47 | 48 | 50 | 0 | 0 | 0 | 0 | 60 | 50 | 49 | 49 |
| | Plasticizer B | 25 | 47 | 48 | 50 | | | | | 60 | 50 | 49 | 49 | | | | |
| Comparative Example 3 | Plasticizer A | 0 | 0 | 0 | 0 | 25 | 32 | 32 | 32 | 0 | 0 | 0 | 0 | 35 | 32 | 32 | 32 |
| | Plasticizer B | 25 | 32 | 32 | 32 | | | | | 35 | 32 | 32 | 32 | | | | |

| | | Amount of plasticizer in layer (1) (parts by mass) | | | | Xi | Xiv | Xii | Xiii | Amount of plasticizer in layer (2) (parts by mass) | | | | Yi | Yiv | Yii | Yiii |
|---|---|---|---|---|---|---|---|---|---|---|---|---|---|---|---|---|---|
| | | Initial stage | Storage at 23°C | | Storage at 23°C after treatment at 140°C | | | | | Initial stage | Storage at 23°C | | Storage at 23°C after treatment at 140°C | | | | |
| | | | For 1 week | For 5 weeks | | | | | | | For 1 week | For 5 weeks | | | | | |
| Comparative Example 4 | Plasticizer A | 0 | 0 | 0 | 0 | 25 | 38 | 39 | 40 | 0 | 0 | 0 | 0 | 60 | 56 | 56 | 55 |
| | Plasticizer B | 25 | 38 | 39 | 40 | | | | | 60 | 56 | 56 | 55 | | | | |

EP 3 412 450 B1

37

Table 9-1]

| | Yi-Xi | Xii-Xi | Yi-Yii | Xiii-Xi | Yi-Yiii | Xiii-Xii | Yii-Yiii |
|---|---|---|---|---|---|---|---|
| Example 1 | 107 | 4 | 1 | 64 | 42 | 60 | 41 |
| Example 2 | 70 | 3 | 1 | 46 | 24 | 43 | 23 |
| Example 3 | 85 | 4 | 1 | 54 | 31 | 50 | 30 |
| Example 4 | 70 | 4 | 1 | 47 | 23 | 43 | 22 |
| Example 5 | 35 | 6 | 2 | 25 | 10 | 19 | 8 |
| Example 6 | 55 | 4 | 4 | 37 | 19 | 33 | 15 |
| Example 7 | 35 | 5 | 3 | 25 | 9 | 20 | 6 |
| Example 8 | 55 | 4 | 1 | 37 | 18 | 33 | 17 |
| Example 9 | 55 | 10 | 4 | 37 | 18 | 27 | 14 |
| Example 10 | 40 | 3 | 1 | 28 | 12 | 25 | 11 |
| Example 11 | 35 | 8 | 3 | 26 | 10 | 18 | 7 |
| Example 12 | 100 | 6 | 2 | 63 | 38 | 57 | 36 |
| Example 13 | 107 | 5 | 1 | 66 | 41 | 61 | 40 |
| Example 14 | 107 | 4 | 1 | 65 | 41 | 61 | 40 |
| Example 15 | 83 | 8 | 1 | 66 | 18 | 58 | 17 |
| Example 16 | 126 | 6 | 2 | 68 | 57 | 62 | 55 |
| Example 17 | 157 | 5 | 4 | 66 | 91 | 61 | 87 |

[Table 9-2]

| | Yi-Xi | Xii-Xi | Yi-Yii | Xiii-Xi | Yi-Yiii | Xiii-Xii | Yii-Yiii |
|---|---|---|---|---|---|---|---|
| Example 18 | 92 | 11 | 5 | 54 | 39 | 43 | 34 |
| Example 19 | 97 | 9 | 3 | 62 | 33 | 53 | 30 |
| Example 20 | 99 | 9 | 2 | 62 | 36 | 53 | 34 |
| Example 21 | 107 | 5 | 1 | 66 | 41 | 61 | 40 |
| Example 22 | 107 | 6 | 0 | 65 | 42 | 59 | 42 |
| Example 23 | 107 | 6 | 2 | 66 | 41 | 60 | 39 |
| Example 24 | 107 | 11 | 3 | 64 | 41 | 53 | 38 |
| Example 25 | 107 | 4 | 1 | 66 | 42 | 62 | 41 |
| Example 26 | 107 | 2 | 0 | 64 | 42 | 62 | 42 |
| Example 27 | 107 | 6 | 1 | 64 | 42 | 58 | 41 |
| Comparative Example 1 | 35 | 24 | 11 | 24 | 11 | 0 | 0 |
| Comparative Example 2 | 35 | 23 | 11 | 25 | 11 | 2 | 0 |
| Comparative Example 3 | 10 | 7 | 3 | 7 | 3 | 0 | 0 |
| Comparative Example 4 | 35 | 14 | 4 | 15 | 5 | 1 | 1 |

[Table 9-3]

|  | Xiv-Xi | Yi-Yiv | Xii-Xiv | Yiv-Yii | Xiii-Xiv | Yiv-Yiii |
|---|---|---|---|---|---|---|
| Example 1 | 0 | 1 | 4 | 0 | 64 | 41 |
| Example 2 | 0 | 1 | 3 | 0 | 46 | 23 |
| Example 3 | 0 | 1 | 4 | 0 | 54 | 30 |
| Example 4 | 0 | 0 | 4 | 1 | 47 | 23 |
| Example 5 | 1 | 0 | 5 | 2 | 24 | 10 |
| Example 6 | 1 | 0 | 3 | 4 | 36 | 1 9 |
| Example 7 | 2 | 1 | 3 | 2 | 23 | 8 |
| Example 8 | 2 | 0 | 2 | 1 | 35 | 18 |
| Example 9 | 3 | 1 | 7 | 3 | 34 | 17 |
| Example 10 | 1 | 0 | 2 | 1 | 27 | 12 |
| Example 11 | 1 | 1 | 7 | 2 | 25 | 9 |
| Example 12 | 0 | 1 | 6 | 1 | 63 | 37 |
| Example 13 | 0 | 1 | 5 | 0 | 66 | 40 |
| Example 14 | 0 | 1 | 4 | 0 | 65 | 40 |
| Example 15 | 0 | 0 | 8 | 1 | 66 | 18 |
| Example 16 | 0 | 1 | 6 | 1 | 68 | 56 |
| Example 17 | 0 | 0 | 5 | 4 | 66 | 91 |

[Table 9-4]

|  | Xiv-Xi | Yi-Yiv | Xii-Xiv | Yiv-Yii | Xiii-Xiv | Yiv-Yiii |
|---|---|---|---|---|---|---|
| Example 18 | 3 | 3 | 8 | 2 | 51 | 36 |
| Example 19 | 3 | 1 | 6 | 2 | 59 | 32 |
| Example 20 | 3 | 1 | 6 | 1 | 59 | 35 |
| Example 21 | 0 | 1 | 5 | 0 | 66 | 40 |
| Example 22 | 1 | 1 | 5 | -1 | 64 | 41 |
| Example 23 | 1 | 1 | 5 | 1 | 65 | 40 |
| Example 24 | 3 | 1 | 8 | 2 | 61 | 40 |
| Example 25 | 0 | 1 | 4 | 0 | 66 | 41 |
| Example 26 | 1 | 1 | 1 | -1 | 63 | 41 |
| Example 27 | 0 | 1 | 6 | 0 | 64 | 41 |
| Comparative Example 1 | 22 | 10 | 2 | 1 | 2 | 1 |
| Comparative Example 2 | 22 | 10 | 1 | 1 | 3 | 1 |
| Comparative Example 3 | 7 | 3 | 0 | 0 | 0 | 0 |
| Comparative Example 4 | 13 | 4 | 1 | 0 | 2 | 1 |

Regarding the laminates of Examples 1 to 27 and Comparative Examples 1 to 4, the evaluation of the average autohesion force at the initial stage of production of the laminate and the average autohesion force after the laminate is stored for 5 weeks from the production, the evaluation of the temperature at which tan$\delta$ of the layer (1) becomes maximal and the temperature at which tan$\delta$ of the layer (2) becomes maximal, the evaluation of the haze when the kneaded product of the laminate is used as an interlayer film for laminated glass, the evaluation of the maximum value of the loss factor of the laminate at 2000 to 6000 Hz, and the evaluation of the optical distortion of the laminated glass were carried out. The evaluation results are shown in Table 10-1 and Table 10-2 Note that Examples 2-18 and 20-27 are reference Examples, not according to the invention.

[Table 10-1]

| | Average autohesion force (N/3 cm) | | Temperature at which tanδ becomes maximal (°C) | | Haze after kneading (%) | Maximum value of loss factor | Optical distortion of laminated glass |
|---|---|---|---|---|---|---|---|
| | Initial stage | For 5 weeks | Layer (1) | Layer (2) | | | |
| Example 1 | 0.3 | 0.4 | 34 | -3 | 0.3 | 0.31 | Absent |
| Example 2 | 0.3 | 0.5 | 34 | -4 | 0.4 | 0.26 | Absent |
| Example 3 | 0.3 | 0.3 | 34 | -2 | 0.4 | 0.26 | Absent |
| Example 4 | 0.3 | 0.3 | 34 | -5 | 0.3 | 0.24 | Absent |
| Example 5 | 0.3 | 0.3 | 34 | -6 | 0.3 | 0.21 | Absent |
| Example 6 | 0.3 | 0.4 | 34 | -3 | 0.3 | 0.21 | Absent |
| Example 7 | 0.3 | 0.3 | 34 | -6 | 0.3 | 0.22 | Absent |
| Example 8 | 0.3 | 0.5 | 34 | -2 | 0.3 | 0.21 | Absent |
| Example 9 | 0.3 | 0.3 | 34 | -3 | 0.3 | 0.2 | Absent |
| Example 10 | 0.3 | 0.4 | 34 | -6 | 0.3 | 0.19 | Absent |
| Example 11 | 0.3 | 0.3 | 34 | -6 | 0.3 | 0.2 | Absent |
| Example 12 | 0.3 | 0.3 | 34 | -3 | 0.3 | 0.31 | Absent |
| Example 13 | 0.3 | 0.5 | 37 | 1 | 0.3 | 0.3 | Absent |
| Example 14 | 0.3 | 0.3 | 35 | -2 | 0.3 | 0.31 | Absent |
| Example 15 | 0.3 | 0.3 | 34 | 4 | 0.3 | 0.3 | Absent |
| Example 16 | 0.3 | 0.4 | 34 | -8 | 0.3 | 0.31 | Absent |
| Example 17 | 0.3 | 0.3 | 34 | -16 | 0.3 | 0.3 | Absent |

[Table 10-2]

| | Average autohesion force (N/3 cm) | | Temperature at which tanδ becomes maximal (°C) | | Haze after kneading (%) | Maximum value of loss factor | Optical distortion of laminated glass |
|---|---|---|---|---|---|---|---|
| | Initial stage | For 5 weeks | Layer (1) | Layer (2) | | | |
| Example 18 | 0.7 | 1.4 | 41 | -3 | 0.3 | 0.34 | Absent |
| Example 19 | 0.4 | 0.8 | 37 | -3 | 0.3 | 0.32 | Absent |
| Example 20 | 0.8 | 1.2 | 30 | -3 | 0.3 | 0.29 | Absent |
| Example 21 | 1.2 | 1.5 | 34 | -7 | 0.3 | 0.31 | Absent |
| Example 22 | 0.3 | 0.3 | 34 | 1 | 0.3 | 0.3 | Absent |
| Example 23 | 0.5 | 0.3 | 34 | -2 | 0.3 | 0.31 | Absent |
| Example 24 | 1.4 | 1.9 | 27 | -6 | 0.3 | 0.38 | Absent |
| Example 25 | 0.3 | 0.3 | 38 | 6 | 0.3 | 0.21 | Absent |
| Example 26 | 0.2 | 0.2 | 43 | 13 | 0.3 | 0.13 | Absent |
| Example 27 | 0.3 | 0.3 | 34 | -3 | 0.7 | 0.33 | Absent |
| Comparative Example 1 | 0.3 | 24.7 | 34 | -6 | 0.3 | 0.18 | Absent |
| Comparative Example 2 | 0.3 | 26.0 | 37 | -7 | 0.2 | 0.17 | Absent |
| Comparative Example 3 | 0.3 | 0.5 | 37 | 26 | 0.3 | 0.04 | Absent |
| Comparative Example 4 | 0.3 | 26.6 | 34 | -6 | 10.3 | 0.24 | Present |

## Claims

1. A laminate comprising a layer (1) and a layer (2) on at least one surface of the layer (1), at least one layer of outermost layers being the layer (1), the laminate having a laminated structure with three or more layers,
   wherein both the layer (1) and the layer (2) contain a plasticizer A and a plasticizer B,
   wherein the layer (1) further contains a thermoplastic resin (I),
   wherein the layer (2) further contains a thermoplastic resin (II) and contains 4 to 200 parts by mass of the plasticizer A with respect to 100 parts by mass of the thermoplastic resin (II),
   wherein a hydroxyl value of the plasticizer A is designated as HV(A) mgKOH/g and wherein HV(A) ≥ 30,
   wherein a hydroxyl value of the plasticizer B is designated as HV(B) mgKOH/g and wherein HV(B) < 30,
   wherein a mass ratio of the plasticizer B to the plasticizer A (a content of the plasticizer B/a content of the plasticizer A) in the layer (1) is designated as R1 and a mass ratio of the plasticizer B to the plasticizer A (a content of the plasticizer B/a content of the plasticizer A) in the layer (2) is designated as R2 and wherein R1 > R2, and
   wherein the thermoplastic resin (I) is a polyvinyl acetal (1) and the thermoplastic resin (II) is a polyvinyl acetal (2), and |H(1)-H(2)|, which is an absolute value of a difference between an average amount of a residual hydroxyl group H(1) of the polyvinyl acetal (1) and an average amount of a residual hydroxyl group H(2) of the polyvinyl acetal (2), is 10 mol% or less.

2. The laminate according to claim 1, wherein a content of the plasticizer B in the layer containing the plasticizer B is 3 to 100 parts by mass with respect to 100 parts by mass of each of the thermoplastic resin (I) and/or the thermoplastic resin (II).

3. The laminate according to claim 1 or 2, wherein a mass ratio of the plasticizer B to the plasticizer A (a content of the plasticizer B/a content of the plasticizer A) in the layer containing the plasticizer A and the plasticizer B is 0.05 to 20.

4. The laminate according to any one of claims 1 to 3, wherein when a total amount of the plasticizer contained in the layer (1) with respect to 100 parts by mass of the thermoplastic resin (I) is designated as $X_i$ parts by mass and a total amount of the plasticizer contained in the layer (2) with respect to 100 parts by mass of the thermoplastic resin (II) is designated as $Y_i$ parts by mass,

$$0 < Y_i - X_i.$$

5. The laminate according to claim 4, wherein in a case where the laminate is stored at 23°C and 50% RH for 5 weeks, when the total amount of the plasticizer contained in the layer (1) with respect to 100 parts by mass of the thermoplastic resin (I) is designated as $X_{ii}$ parts by mass and the total amount of the plasticizer contained in the layer (2) with respect to 100 parts by mass of the thermoplastic resin (II) is designated as $Y_{ii}$ parts by mass,

$$X_{ii} - X_i < 20 \text{ and } Y_i - Y_{ii} < 20,$$

and
in a case where the laminate is treated at 140°C for 30 minutes, then cooled to 23°C within 1 hour, and stored at 23°C and 50% RH for 5 weeks, when the total amount of the plasticizer contained in the layer (1) with respect to 100 parts by mass of the thermoplastic resin (I) is designated as $X_{iii}$ parts by mass and the total amount of the plasticizer contained in the layer (2) with respect to 100 parts by mass of the thermoplastic resin (II) is designated as $Y_{iii}$ parts by mass,

$$3 < X_{iii} - X_i, \ 3 < Y_i - Y_{iii}, \ 0 < X_{iii} - X_{ii}, \text{ and } 0 < Y_{ii} - Y_{iii}.$$

6. The laminate according to any one of claims 1 to 5, wherein a total amount of the plasticizers contained in the layer (1) and the layer (2) with respect to 100 parts by mass of a total amount of the thermoplastic resin (I) and the thermoplastic resin (II) is 20 parts by mass or more.

7. The laminate according to any one of claims 1 to 6, wherein a difference between a cloud point of a solution obtained by dissolving 9 parts by mass of the polyvinyl acetal (1) in 100 parts by mass of the plasticizer A and a cloud point of a solution obtained by dissolving 9 parts by mass of the polyvinyl acetal (1) in 100 parts by mass of the plasticizer B is 10°C or higher.

8. The laminate according to any one of claims 1 to 7, wherein a storage elastic modulus at 20°C of at least one of the layer (1) and the layer (2) is 10 MPa or more, and
the storage elastic modulus is a value measured by performing a dynamic viscoelasticity test in the condition of a frequency of 0.3 Hz in accordance with JIS K 7244-4: 1999.

9. The laminate according to any one of claims 1 to 8, wherein the laminate has an uneven configuration on at least one surface and a ten point average roughness Rz of the surface is 10 to 100 $\mu$m.

10. The laminate according to any one of claims 1 to 9, wherein in a case where a stress at 10% elongation at 23°C of the laminate is designated as $S_1$ MPa,
a stress at 10% elongation at 23°C of the laminate after being stored at 23°C and 50% RH for 5 weeks is designated as $S_2$ MPa, and
a stress at 10% elongation at 23°C of the laminate after being treated at 140°C for 30 minutes, cooled to 23°C within 1 hour after being treated, and stored at 23°C and 50% RH for 5 weeks after being cooled is designated as $S_3$ MPa, the following Formulae (1) to (3) are satisfied.

(1): $S_2/S_1 \geq 0.2$ and/or $S_1 - S_2 \leq 1.0$
(2): $S_3/S_1 \leq 0.9$ and/or $S_1 - S_3 \geq 0.2$
(3): $S_2 - S_3 > 0$

11. The laminate according to any one of claims 1 to 10, wherein a temperature at which tan$\delta$, which is measured by performing a dynamic viscoelasticity test in the condition of a frequency of 0.3 Hz in accordance with JIS K 7244-4:

1999 in at least one layer of the layer (1) and the layer (2), becomes maximal is 20°C or higher.

12. The laminate according to any one of claims 1 to 11, wherein in a laminated glass obtained by sandwiching the laminate between two glass plates and performing a treatment to the obtained product at a temperature of 120°C or higher for at least 20 minutes,
a maximum value of a loss factor at an excitation frequency of 2000 to 6000 Hz at 20°C is 0.05 or more.

13. The laminate according to any one of claims 1 to 12, wherein a sum of the thickness of the layer (1) is smaller than three times a sum of the thickness of the layer (2).

14. The laminate according to any one of claims 1 to 13, wherein in a case where the laminate is melt-kneaded at 150°C for 5 minutes to be formed in a sheet shape having a thickness of 0.8 mm, and is sandwiched with two glass plates to obtain a laminated glass,
a haze of the laminated glass is less than 3%.

15. An interlayer film for laminated glass comprising the laminate according to any one of claims 1 to 14.

16. A laminated glass being obtained by sandwiching the interlayer film for laminated glass according to claim 15 between two glass plates.

17. A method for producing a laminated glass, comprising sandwiching the interlayer film for laminated glass according to claim 15 between two glass plates and performing a treatment at a temperature higher than 100°C for 10 minutes or longer.

**Patentansprüche**

1. Laminat, umfassend eine Schicht (1) und eine Schicht (2) auf mindestens einer Oberfläche der Schicht (1), wobei mindestens eine Schicht der äußersten Schichten die Schicht (1) ist, wobei das Laminat eine laminierte Struktur mit drei oder mehr Schichten aufweist,
wobei sowohl die Schicht (1) als auch die Schicht (2) einen Weichmacher A und einen Weichmacher B enthalten,
wobei die Schicht (1) weiter ein thermoplastisches Harz (I) enthält,
wobei die Schicht (2) weiter ein thermoplastisches Harz (II) enthält und 4 bis 200 Massenteile des Weichmachers A, bezogen auf 100 Massenteile des thermoplastischen Harzes (II), enthält,
wobei eine Hydroxylzahl des Weichmachers A als HV(A) mgKOH/g bezeichnet ist und wobei HV(A) $\geq$ 30,
wobei eine Hydroxylzahl des Weichmachers B als HV(B) mgKOH/g bezeichnet ist und wobei HV(B) < 30,
wobei ein Massenverhältnis des Weichmachers B zum Weichmacher A (ein Gehalt des Weichmachers B/ein Gehalt des Weichmachers A) in der Schicht (1) als R1 bezeichnet ist und ein Massenverhältnis des Weichmachers B zum Weichmacher A (ein Gehalt des Weichmachers B/ein Gehalt des Weichmachers A) in der Schicht (2) als R2 bezeichnet ist und wobei R1 > R2 und
wobei das thermoplastische Harz (I) ein Polyvinylacetal (1) ist und das thermoplastische Harz (II) ein Polyvinylacetal (2) ist und
|H(1)-H(2)|, das ein absoluter Wert einer Differenz zwischen einer durchschnittlichen Menge einer restlichen Hydroxylgruppe H(1) des Polyvinylacetals (1) und einer durchschnittlichen Menge einer restlichen Hydroxylgruppe H(2) des Polyvinylacetals (2) ist, 10 Mol% oder weniger beträgt.

2. Laminat nach Anspruch 1, wobei ein Gehalt des Weichmachers B in der den Weichmacher B enthaltenden Schicht 3 bis 100 Massenteile, bezogen auf 100 Massenteile von jedem von dem thermoplastischen Harz (I) und/oder dem thermoplastischen Harz (II), beträgt.

3. Laminat nach Anspruch 1 oder 2, wobei ein Massenverhältnis des Weichmachers B zum Weichmacher A (ein Gehalt des Weichmachers B/ein Gehalt des Weichmachers A) in der den Weichmacher A und den Weichmacher B enthaltenden Schicht 0,05 bis 20 beträgt.

4. Laminat nach einem der Ansprüche 1 bis 3, wobei, wenn eine Gesamtmenge des in der Schicht (1) enthaltenen Weichmachers, bezogen auf 100 Massenteile des thermoplastischen Harzes (I), als $X_i$ Massenteile bezeichnet ist und eine Gesamtmenge des in der Schicht (2) enthaltenen Weichmachers, bezogen auf 100 Massenteile des thermoplastischen Harzes (II), als $Y_i$ Massenteile bezeichnet ist,

$0 < Y_i - X_i$.

5. Laminat nach Anspruch 4, wobei in einem Fall, in dem das Laminat 5 Wochen bei 23°C und 50% relativer Feuchtigkeit gelagert wird,

   $X_{ii} - X_i < 20$ und $Y_i - Y_{ii} < 20$,

   wenn die Gesamtmenge des in der Schicht (1) enthaltenen Weichmachers, bezogen auf 100 Massenteile des thermoplastischen Harzes (I), als $X_{ii}$ Massenteile bezeichnet ist und die Gesamtmenge des in der Schicht (2) enthaltenen Weichmachers, bezogen auf 100 Massenteile des thermoplastischen Harzes (II), als $Y_{ii}$ Massenteile bezeichnet ist, und

   in einem Fall, in dem das Laminat 30 Minuten bei 140°C behandelt, dann innerhalb von 1 Stunde auf 23°C abgekühlt und 5 Wochen bei 23°C und 50% relativer Feuchtigkeit gelagert wird,

   $3 < X_{iii} - X_i$, $3 < Y_i - Y_{iii}$, $0 < X_{iii} - X_{ii}$, und $0 < Y_{ii} - V_{iii}$,

   wenn die Gesamtmenge des in der Schicht (1) enthaltenen Weichmachers, bezogen auf 100 Massenteile des thermoplastischen Harzes (I), als $X_{iii}$ Massenteile bezeichnet ist und die Gesamtmenge des in der Schicht (2) enthaltenen Weichmachers, bezogen auf 100 Massenteile des thermoplastischen Harzes (II), als $Y_{iii}$ Massenteile bezeichnet ist.

6. Laminat nach einem der Ansprüche 1 bis 5, wobei die Gesamtmenge der in der Schicht (1) und der Schicht (2) enthaltenen Weichmacher, bezogen auf 100 Massenteile der Gesamtmenge des thermoplastischen Harzes (I) und des thermoplastischen Harzes (II), 20 Massenteile oder mehr beträgt.

7. Laminat nach einem der Ansprüche 1 bis 6, wobei eine Differenz zwischen einem Trübungspunkt einer Lösung, erhalten durch Lösen von 9 Massenteilen des Polyvinylacetals (1) in 100 Massenteilen des Weichmachers A, und einem Trübungspunkt einer Lösung, erhalten durch Lösen von 9 Massenteilen des Polyvinylacetals (1) in 100 Massenteilen des Weichmachers B, 10°C oder mehr beträgt.

8. Laminat nach einem der Ansprüche 1 bis 7, wobei ein Speicherelastizitätsmodul bei 20°C von mindestens einer der Schicht (1) und der Schicht (2) 10 MPa oder mehr beträgt und der Speicherelastizitätsmodul ein Wert ist, gemessen mittels Durchführung eines dynamischen Viskoelastizitätstests unter der Bedingung einer Frequenz von 0,3 Hz gemäß JIS K 7244-4: 1999.

9. Laminat nach einem der Ansprüche 1 bis 8, wobei das Laminat auf mindestens einer Oberfläche eine unebene Konfiguration aufweist und ein Zehn-Punkt-Mittelwert der Rauheit Rz der Oberfläche 10 bis 100 $\mu$m beträgt.

10. Laminat nach einem der Ansprüche 1 bis 9, wobei in einem Fall, in dem eine Spannung bei 10% Dehnung bei 23°C des Laminats als $S_1$ MPa bezeichnet ist, eine Spannung bei 10% Dehnung bei 23°C des Laminats, nachdem es 5 Wochen bei 23°C und 50% relativer Feuchtigkeit gelagert wird, als $S_2$ MPa bezeichnet ist und eine Spannung bei 10% Dehnung bei 23°C des Laminats, nachdem es 30 Minuten lang bei 140°C behandelt, innerhalb von 1 Stunde nach der Behandlung auf 23°C abgekühlt und nach dem Abkühlen 5 Wochen lang bei 23°C und 50% relativer Feuchtigkeit gelagert wird, als $S_3$ MPa bezeichnet ist, die folgenden Formeln (1) bis (3) erfüllt sind.

    (1): $S_2/S_1 \geq 0,2$ und/oder $S_1 - S_2 \leq 1,0$
    (2): $S_3/S_1 \leq 0,9$ und/oder $S_1 - S_3 \geq 0,2$
    (3): $S_2 - S_3 > 0$

11. Laminat nach einem der Ansprüche 1 bis 10, wobei eine Temperatur, bei der tan$\delta$, das mittels Durchführung eines dynamischen Viskoelastizitätstests unter der Bedingung einer Frequenz von 0,3 Hz gemäß JIS K 7244-4: 1999 in mindestens einer Schicht der Schicht (1) und der Schicht (2) gemessen wird, maximal wird, 20°C oder höher ist.

12. Laminat nach einem der Ansprüche 1 bis 11, wobei in einem laminierten Glas, erhalten durch sandwichartiges Anordnen des Laminats zwischen zwei Glasplatten und Durchführen einer Behandlung an dem erhaltenen Produkt bei einer Temperatur von 120°C oder höher für mindestens 20 Minuten, ein Maximalwert eines Verlustfaktors bei einer Anregungsfrequenz von 2000 bis 6000 Hz bei 20°C 0,05 oder mehr beträgt.

13. Laminat nach einem der Ansprüche 1 bis 12, wobei eine Summe der Dicke der Schicht (1) kleiner ist als das Dreifache einer Summe der Dicke der Schicht (2).

**14.** Laminat nach einem der Ansprüche 1 bis 13, wobei in einem Fall, in dem das Laminat bei 150°C für 5 Minuten schmelzgeknetet wird, um in eine Plattenform mit einer Dicke von 0,8 mm geformt zu werden, und mit zwei Glasplatten sandwichartig angeordnet wird, um ein laminiertes Glas zu erhalten,
eine Trübung des laminierten Glases weniger als 3% beträgt.

**15.** Zwischenschichtfolie für laminiertes Glas, umfassend das Laminat nach einem der Ansprüche 1 bis 14.

**16.** Laminiertes Glas, erhalten durch sandwichartiges Anordnen der Zwischenschichtfolie für laminiertes Glas nach Anspruch 15 zwischen zwei Glasplatten.

**17.** Verfahren zur Herstellung eines laminierten Glases, umfassend das sandwichartige Anordnen der Zwischenschichtfolie für laminiertes Glas nach Anspruch 15 zwischen zwei Glasplatten und das Durchführen einer Behandlung bei einer Temperatur von höher als 100°C für 10 Minuten oder länger.

**Revendications**

**1.** Stratifié comprenant une couche (1) et une couche (2) sur au moins une surface de la couche (1), au moins une couche de couches les plus à l'extérieur étant la couche (1), le stratifié ayant une structure stratifiée avec trois couches ou plus,
dans lequel la couche (1) et la couche (2) contiennent toutes deux un plastifiant A et un plastifiant B,
dans lequel la couche (1) contient en outre une résine thermoplastique (I),
dans lequel la couche (2) contient en outre une résine thermoplastique (II) et contient 4 à 200 parties en masse du plastifiant A par rapport à 100 parties en masse de la résine thermoplastique (II),
dans lequel une valeur hydroxyle du plastifiant A est désignée par HV(A) mgKOH/g et dans lequel HV(A) $\geq$ 30,
dans lequel une valeur hydroxyle du plastifiant B est désignée par HV(B) mgKOH/g et dans lequel HV(B) < 30,
dans lequel un rapport massique du plastifiant B sur le plastifiant A (une teneur en le plastifiant B/une teneur en le plastifiant A) dans la couche (1) est désigné par R1 et un rapport massique du plastifiant B sur le plastifiant A (une teneur en le plastifiant B/une teneur en le plastifiant A) dans la couche (2) est désigné par R2, et dans lequel R1 > R2, et
dans lequel la résine thermoplastique (I) est un acétal de polyvinyle (1) et la résine thermoplastique (II) est un acétal de polyvinyle (2), et
|H(1)-H(2)|, qui est une valeur absolue d'une différence entre une quantité moyenne d'un groupe hydroxyle résiduel H(1) de l'acétal de polyvinyle (1) et une quantité moyenne d'un groupe hydroxyle résiduel H(2) de l'acétal de polyvinyle (2), est de 10 % en mol ou moins.

**2.** Stratifié selon la revendication 1, dans lequel une teneur en le plastifiant B dans la couche contenant le plastifiant B est de 3 à 100 parties en masse par rapport à 100 parties en masse de chacune de la résine thermoplastique (I) et/ou de la résine thermoplastique (II).

**3.** Stratifié selon la revendication 1 ou 2, dans lequel un rapport massique du plastifiant B sur le plastifiant A (une teneur en le plastifiant B/une teneur en le plastifiant A) dans la couche contenant le plastifiant A et le plastifiant B est de 0,05 à 20.

**4.** Stratifié selon l'une quelconque des revendications 1 à 3, dans lequel lorsqu'une quantité totale du plastifiant contenu dans la couche (1) par rapport à 100 parties en masse de la résine thermoplastique (I) est désignée par $X_i$ parties en masse et une quantité totale du plastifiant contenu dans la couche (2) par rapport à 100 parties en masse de la résine thermoplastique (II) est désignée par $Y_i$ parties en masse,

$$0 < Y_i - X_i.$$

**5.** Stratifié selon la revendication 4, dans lequel au cas où le stratifié est stocké à 23°C et 50 % HR pendant 5 semaines, lorsque la quantité totale du plastifiant contenu dans la couche (1) par rapport à 100 parties en masse de la résine thermoplastique (I) est désignée par $X_{ii}$ parties en masse et la quantité totale du plastifiant contenu dans la couche (2) par rapport à 100 parties en masse de la résine thermoplastique (II) est désignée par $Y_{ii}$ parties en masse,
$X_{ii} - X_i$ < 20 et $Y_i - Y_{ii}$ < 20, et
au cas où le stratifié est traité à 140°C pendant 30 minutes, puis refroidi à 23°C dans l'heure, et stocké à 23°C et 50 % HR pendant 5 semaines, lorsque la quantité totale du plastifiant contenu dans la couche (1) par rapport à 100 parties en masse de la résine thermoplastique (I) est désignée par $X_{iii}$ parties en masse et la quantité totale du plastifiant contenu dans la couche (2) par rapport à 100 parties en masse de la résine thermoplastique (II) est désignée par $Y_{iii}$ parties en masse,

$$3 < X_{iii} - X_i, \ 3 < Y_i - Y_{iii}, \ 0 < X_{iii} - X_{ii} \text{ et } 0 < Y_{ii} - Y_{iii}.$$

6. Stratifié selon l'une quelconque des revendications 1 à 5, dans lequel une quantité totale des plastifiants contenus dans la couche (1) et la couche (2) par rapport à 100 parties en masse d'une quantité totale de la résine thermoplastique (I) et de la résine thermoplastique (II) est de 20 parties en masse ou plus.

7. Stratifié selon l'une quelconque des revendications 1 à 6, dans lequel une différence entre un point de trouble d'une solution obtenue en dissolvant 9 parties en masse de l'acétal de polyvinyle (1) dans 100 parties en masse du plastifiant A et un point de trouble d'une solution obtenue en dissolvant 9 parties en masse de l'acétal de polyvinyle (1) dans 100 parties en masse du plastifiant B est de 10°C ou supérieure.

8. Stratifié selon l'une quelconque des revendications 1 à 7, dans lequel un module de stockage élastique à 20°C d'au moins une de la couche (1) et de la couche (2) est de 10 MPa ou plus, et le module de stockage élastique est une valeur mesurée en réalisant un test de viscoélasticité dynamique dans la condition d'une fréquence de 0,3 Hz conformément à JIS K 7244-4 : 1999.

9. Stratifié selon l'une quelconque des revendications 1 à 8, dans lequel le stratifié a une configuration irrégulière sur au moins une surface et une rugosité moyenne en dix points Rz de la surface est de 10 à 100 μm.

10. . Stratifié selon l'une quelconque des revendications 1 à 9, dans lequel au cas où une contrainte à 10 % d'allongement à 23°C du stratifié est désignée par $S_1$ MPa, une contrainte à 10 % d'allongement à 23°C du stratifié après avoir été stocké à 23°C et 50 % HR pendant 5 semaines est désignée par $S_2$ MPa, et une contrainte à 10 % d'allongement à 23°C du stratifié après avoir été traité à 140°C pendant 30 minutes, refroidi à 23°C dans l'heure après avoir été traité, et stocké à 23°C et 50 % HR pendant 5 semaines après avoir été refroidi, est désignée par $S_3$ MPa, les Formules (1) à (3) suivantes sont satisfaites.

    (1) $S_2/S_1 \geq 0,2$ et/ou $S_1 - S_2 \leq 1,0$
    (2) $S_3/S_1 \leq 0,9$ et/ou $S_1 - S_3 \geq 0,2$
    (3) $S_2 - S_3 > 0$

11. Stratifié selon l'une quelconque des revendications 1 à 10, dans lequel une température à laquelle tanδ, qui est mesuré en réalisant un test de viscoélasticité dynamique dans la condition d'une fréquence de 0,3 Hz conformément à JIS K 7244-4 : 1999 dans au moins une couche de la couche (1) et de la couche (2), devient maximal est de 20°C ou supérieure.

12. Stratifié selon l'une quelconque des revendications 1 à 11, dans lequel dans un verre stratifié obtenu en prenant en sandwich le stratifié entre deux plaques de verre et réalisant un traitement sur le produit obtenu à une température de 120°C ou supérieure pendant au moins 20 minutes, une valeur maximale d'un facteur de perte à une fréquence d'excitation de 2000 à 6000 Hz à 20°C est de 0,05 ou plus.

13. Stratifié selon l'une quelconque des revendications 1 à 12, dans lequel une somme de l'épaisseur de la couche (1) est inférieure à trois fois une somme de l'épaisseur de la couche (2).

14. Stratifié selon l'une quelconque des revendications 1 à 13, dans lequel au cas où le stratifié est malaxé à l'état fondu à 150°C pendant 5 minutes pour être formé en une forme de feuille ayant une épaisseur de 0,8 mm, et est pris en sandwich avec deux plaques de verre pour obtenir un verre stratifié, une diffusion du verre stratifié est inférieure à 3 %.

15. Film intercouche pour verre stratifié comprenant le stratifié selon l'une quelconque des revendications 1 à 14.

16. Verre stratifié qui est obtenu en prenant en sandwich le film intercouche pour verre stratifié selon la revendication 15 entre deux plaques de verre.

17. Procédé de production d'un verre stratifié, comprenant prendre en sandwich le film intercouche pour verre stratifié selon la revendication 15 entre deux plaques de verre et réaliser un traitement à une température supérieure à 100°C pendant 10 minutes ou plus longtemps.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015116681 A
- JP 2005206445 A
- JP 2007331959 A